(19) Europäisches Patentamt
European Patent Office
Office européen des brevets

(11) **EP 4 429 365 A1**

(12) **EUROPEAN PATENT APPLICATION**
published in accordance with Art. 153(4) EPC

(43) Date of publication:
**11.09.2024 Bulletin 2024/37**

(21) Application number: **22890336.5**

(22) Date of filing: **02.11.2022**

(51) International Patent Classification (IPC):
**H04W 72/04** (2023.01)   **H04L 5/00** (2006.01)
**H04L 1/00** (2006.01)

(52) Cooperative Patent Classification (CPC):
**H04L 1/00; H04L 5/00; H04W 72/04**

(86) International application number:
**PCT/KR2022/016950**

(87) International publication number:
**WO 2023/080605 (11.05.2023 Gazette 2023/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 04.11.2021  KR 20210150832
05.11.2021  KR 20210151792
10.11.2021  KR 20210154302
11.02.2022  KR 20220018414

(71) Applicant: **LG Electronics Inc.**
**Yeongdeungpo-gu**
**Seoul 07336 (KR)**

(72) Inventors:
• **CHOI, Seunghwan**
**Seoul 06772 (KR)**
• **YANG, Suckchel**
**Seoul 06772 (KR)**
• **KIM, Seonwook**
**Seoul 06772 (KR)**

(74) Representative: **Maikowski & Ninnemann**
**Patentanwälte Partnerschaft mbB**
**Postfach 15 09 20**
**10671 Berlin (DE)**

(54) **METHOD AND APPARATUS FOR MONITORING SIGNAL IN WIRELESS COMMUNICATION SYSTEM**

(57)    A method and apparatus for monitoring a signal in a wireless communication system, disclosed in the present specification, may perform multiple slot PDCCH monitoring. In relation to a combination of X and Y determined for the multiple slot PDCCH monitoring, a second slot group comprises consecutive Y slots to which wrap-around is applied in a time domain, starting from a specific slot of a first slot group comprising X slots.

【FIG. 5】

**Description**

**TECHNICAL FIELD**

The present disclosure relates to a method and apparatus for use in a wireless communication system.

**BACKGROUND**

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

**DISCLOSURE**

**TECHNICAL PROBLEM**

The object of the present disclosure is to provide a method and apparatus for monitoring a control signal efficiently in a wireless communication system.

It will be appreciated by persons skilled in the art that the objects that could be achieved with the present disclosure are not limited to what has been particularly described hereinabove and the above and other objects that the present disclosure could achieve will be more clearly understood from the following detailed description.

**TECHNICAL SOLUTION**

The present disclosure provides a method and apparatus for monitoring a signal in a wireless communication system.

In an aspect of the present disclosure, provided herein is a method of monitoring a control signal by a user equipment (UE) in a wireless communication system. The method may include: determining a combination of X and Y for monitoring a physical downlink control channel (PDCCH); and monitoring the PDCCH based on the combination of X and Y. X is a number of consecutive slots included in a first slot group, and a plurality of first slot groups are repeated continuously without overlapping. Y is a number of consecutive slots included in a second slot group, and the second slot group consists of consecutive slots to which wrap-around is applied within the first slot group.

In other aspects of the present disclosure, an apparatus, a processor and a storage medium for performing the signal monitoring method are provided.

The communication apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

**ADVANTAGEOUS EFFECTS**

According to an embodiment of the present disclosure, when communication devices monitor control signals, the communication devices may perform more efficient signal monitoring based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

**BRIEF DESCRIPTION OF THE DRAWINGS**

FIG. 1 illustrates a radio frame structure.

FIG. 2 illustrates a resource grid during the duration of a slot.

FIG. 3 shows an example in which a physical channel is mapped in a slot.

FIGS. 4 to 7 show a signal monitoring method according to an embodiment of the present disclosure.

FIGS. 8 to 11 illustrate devices according to an embodiment of the present disclosure.

## DETAILED DESCRIPTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

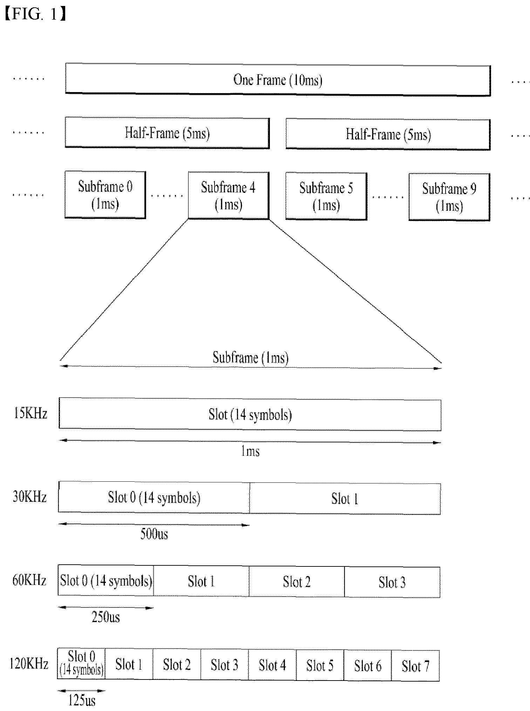

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

[Table 1]

| SCS ($15*2^u$) | $N^{slot}_{symb}$ | $N^{frame,u}_{slot}$ | $N^{subframe,u}_{slot}$ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |

(continued)

| SCS (15*2^u) | $N^{slot}_{symb}$ | $N^{frame,u}_{slot}$ | $N^{subframe,u}_{slot}$ |
|---|---|---|---|
| 240KHz (u=4) | 14 | 160 | 16 |

* $N^{slot}_{symb}$: number of symbols in a slot
* $N^{frame,u}_{slot}$: number of slots in a frame
* $N^{subframe,u}_{slot}$: number of slots in a subframe

Table 2 illustrates that the number of symbols per slot, the number of slots per frame, and the number of slots per subframe vary according to SCSs in an extended CP case.

[Table 2]

| SCS (15*2^u) | $N^{slot}_{symb}$ | $N^{frame,u}_{slot}$ | $N^{subframe,u}_{slot}$ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

NR may support various numerologies (or subcarrier spacings (SCSs)) to provide various 5G services. For example, NR may support a wide area in conventional cellular bands for an SCS of 15 kHz and support a dense urban area and a wide carrier bandwidth with lower latency for an SCS of 30 or 60 kHz. For an SCS of 60 kHz or above, NR may support a bandwidth higher than 24.25 GHz to overcome phase noise.

NR frequency bands may be divided into two frequency ranges: frequency range 1 (FR1) and frequency range 2 (FR2). FR1 and FR2 may be configured as shown in Table A6 below. FR 2 may mean a millimeter wave (mmW).

[Table 3]

| Frequency Range designation | Corresponding frequency range | Subcarrier Spacing |
|---|---|---|
| FR1 | 450MHz - 7125MHz | 15, 30, 60kHz |
| FR2 | 24250MHz - 52600MHz | 60, 120, 240kHz |

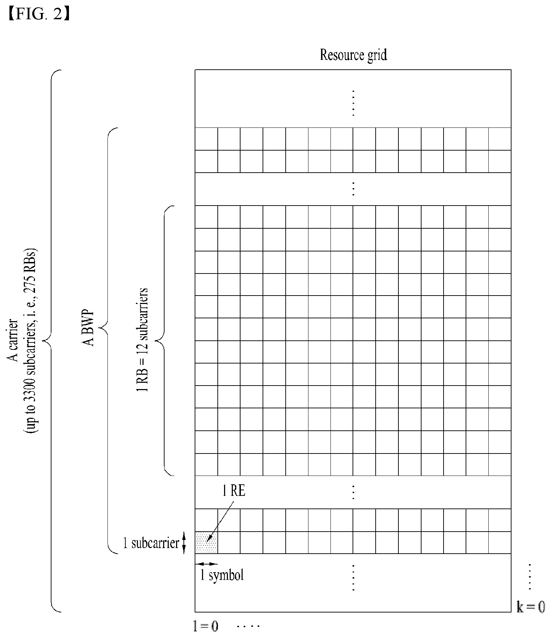

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

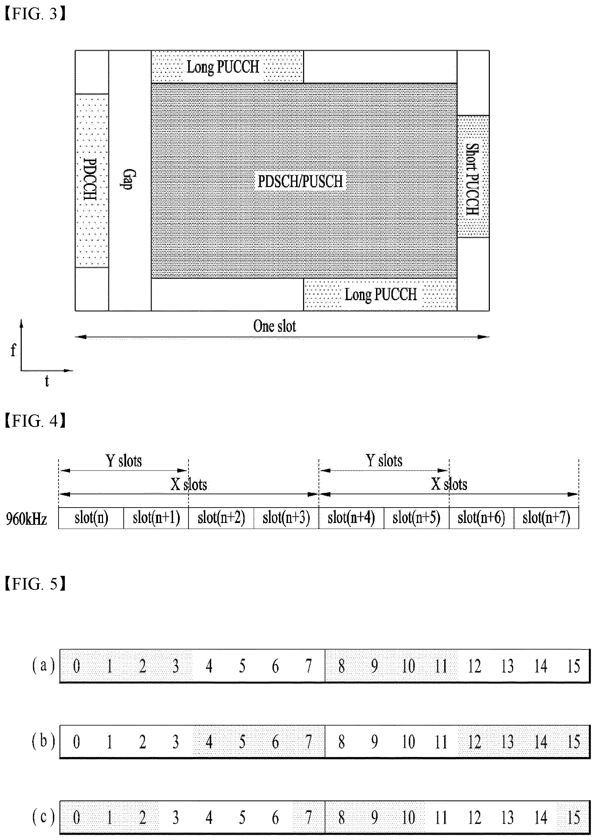

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

DL Physical Channel/Signal

(1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

(2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

[Table 4]

| DCI format | Usage |
|---|---|
| 0_0 | Scheduling of PUSCH in one cell |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 1 2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

[Table 5]

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | |
| C-RNTI | Dynamically scheduled unicast transmission | UL-SCH |
| MCS-C-RNTI | Dynamically scheduled unicast transmission | DL-SCH |
| C-RNTI | Triggering of PDCCH ordered random access | N/A |
| CS(Configured Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption) RNTI INT (Interruption)-RNTI | Indication pre-emption in DL | N/A |
| SFI(Slot Format Indication)-RNTI | Slot Format Indication on the given cell | N/A |
| SP(Semi-persistent)-CSI(Chmnel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.

- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

[Table 6]

| Search Space | Type | RNTI | Use Case |
|---|---|---|---|
| Type0-PDCCH | Common | SI-RNTI on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTT on a primary cell | Paging System Information change notification |
| Type3-PDCCH | Common | INT-RNTI, SFI-RNTI TPC-PUSCH-RNTL TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.

- searchSpaceId: this parameter/information indicates the ID of the SS set.

- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={ 1, 2, 4, 8, 16}).
- searchSpaceType: this parameter/information indicates whether the SS type is the CSS or USS.

DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

## 1. Multi-Slot PDCCH Monitoring

The above description may be applied in combination with the methods proposed in the present disclosure to be described later, or may be supplemented to clarify the technical characteristics of the methods proposed in the present disclosure.

In addition, the methods to be described later may be equally applied to the above-described NR system (licensed band) or shared spectrum, and may be modified or replaced to fit the terms, expressions, structures, and the like defined in each system to implement the technical idea proposed in the present specification in the corresponding system.

In a NR system, multiple numerologies (or subcarrier spacing (SCS)) are supported to support a variety of 5G services. For example, a wide area in typical cellular bands is supported for an SCS of 15kHz, a dense-urban area, a lower latency, and a wider carrier bandwidth are supported for an SCS of 30 kHz/60 kHz, and a larger bandwidth than 24.25GHz is supported for an SCS of 60 kHz or more. An NR frequency band up to Release 16 may be defined as two types of frequency ranges (FR1 and FR2) and may be configured as shown in Table 3. In addition, discussions are going on to support future NR systems in a frequency band defined in FR1/FR2 or higher (e.g., 52.6 GHz to 71 GHz).

A higher frequency band than FR1 and FR2 bands (e.g., 52.6 GHz to 114.25 GHz band, particularly 52.6 GHz to 71 GHz) may be referred to as FR2-2. Waveforms, SCS, CP length, timing, etc. defined for FR1 and FR2 in the existing NR system may not be applied to FR2-2.

SCS of 120 kHz, 480 kHz, and 960 kHz may be used for an operation of the NR in an FR2-2 band. In the case of SCS of 480 kHz and 960 kHz, the length of an OFDM symbol may be shorter than that of 120 kHz. For example, an OFDM symbol of 480 kHz is 1/4 the length of an OFDM symbol of 120 kHz, and an OFDM symbol of 960 kHz is 1/8 times of the length of an OFDM symbol of 120 kHz. For a short-length slot to which 480 kHz and 960 kHz are applied, when a PDCCH monitoring operation is performed in all slots, the UE may have a burden such as power consumption. Therefore, when SCS of 480 kHz and/or 960 kHz is configured, multi-slot PDCCH monitoring may be introduced.

Multi-slot PDCCH monitoring refers to an operation of performing PDCCH monitoring by determining blind decoding (BD)/control channel element (CCE) limits based on a plurality of consecutive slots and/or on a basis of a plurality of consecutive slots. In the conventional NR rel-15, BD/CCE limits may be determined in units of one slot, and in NR Rel-16, BD/CCE limits may be determined in units of spans confined within one slot. The span may mean a PDCCH monitoring unit including consecutive symbols.

Hereinafter, PDCCH monitoring performed in units of slots may be expressed as per-slot monitoring, PDCCH monitoring performed in units of spans may be expressed as per-span monitoring, and PDCCH monitoring performed in units of slots-groups may be expressed as per-X monitoring.

BD limits refer to "Maximum number of monitored PDCCH candidates for a DL BWP with SCS configuration for a single serving cell" on the 3GPP standard, and CCE limits refer to "Maximum number of non-overlapped CCEs for a DL BWP with SCS configuration for a single serving cell" on the 3GPP standard.

A plurality of consecutive slots, which are a reference of multi-slot PDCCH monitoring, is referred to as a slot group. A slot group may include X consecutive slots, and BD/CCE limits may be defined in units of slot groups. For example, for SCS of 480 kHz, BD/CCE limit per slot group including X=4 slots may be defined. In addition, Y consecutive slots may be defined in a slot group. There may be types of search space (SS) sets that are limited in such a way that PDCCH monitoring is performed only in Y slots. In a per-X monitoring operation, some parameters (e.g., periodicity, offset, or duration) of the SS set configuration need to be configured in units of X. For example, the periodicity may be configured as a value in units of slots in per-slot monitoring, but may be configured in units of X slots in per-X monitoring. For example, if X=8 is configured in a cell in which SCS of 960 kHz is used, a period value for per-X monitoring may include only a multiple of 8.

PDCCH monitoring may be performed only in specific Y consecutive slots within a slot group including X consecutive slots, and PDCCH monitoring may not be performed in slots except for the Y slots among the X slots.

A PDCCH related to a specific SS set type may be monitored only in Y slots, and a PDCCH related to another SS set types may be monitored in X slots.

The UE performs PDCCH monitoring on a search space set (SS set) basis. The SS set includes a common SS set and a UE-specific SS set. The common SS (CSS) set may include a Type 0 PDCCH CSS set, a Type 0A PDCCH CSS set, a Type 1 PDCCH CSS set provided by dedicated higher layer signalling, a Type 1 PDCCH CSS set provided in SIB1, Type 2 PDCCH CSS set, Type 3 PDCCH CSS set, and so on.

An SS set type (hereinafter referred to as a group 2 SS set or group(2) SS) capable of being monitored in X slots may include a Type 0 PDCCH CSS set, a Type 0A PDCCH CSS set, a Type 2 PDCCH CSS set, and a Type 1 PDCCH CSS set based on SIB1. An SS set type (hereinafter referred to as a group 1 SS set or group (1) SS) capable of being monitored in Y slots may include a Type 1 PDCCH CSS set based on dedicated higher layer signaling, a Type 3 PDCCH CSS set, and an USS set.

FIG. 4 shows an example of monitoring a PDCCH based on combinations of X and Y.

FIG. 4 shows an example in which X=4 and Y=2 are configured. In FIG. 4, a PDCCH is monitored in a cell configured with an SCS of 960 kHz. Slot groups with X=4 are contiguous without overlapping in the time domain. For example, the first two slots among X slots are set as Y slots, and the positions of the Y slots may be the middle two slots or the last two slots. Since an USS set is illustrated as a second SS set type, a PDCCH for the USS set may be monitored only in the Y slots: slot n, slot n+1, slot n+4, and slot n+5. In other words, a PDCCH MO (monitoring occasion) may be configured and/or located only in the Y slots. Thus, the UE may reduce power consumption without monitoring the PDCCH within a duration excluding the Y slots. According to the configuration, MOs for a specific group of SS sets may be limited to exist within Y1 slots, while MOs for another specific group of SS sets may be limited to exist within Y2 slots. That is, different Y slots may be defined within a single slot group.

The position of an MO for the Type 0 PDCCH CSS set may vary depending on the synchronization signal/physical broadcast channel (SSB) index, which is the best SSB (e.g., with the highest reception power) among SSBs (or SS/PBCH blocks) that the UE is capable of receiving. In particular, if the multiplexing pattern of an SSB and CORESET is pattern 1 (i.e., if the SSB and CORESET are time-division multiplexed), a slot determined from the SSB index according to 3GPP TS 38.213 (slot #($n\_0$) in Table 7) and the next slot (slot #($n\_0+1$) in Table 7) are used as the MO for the Type 0 CSS set..

[Table 7]

For operation without shared spectrum channel access and for the SS/PBCH block and CORESET multiplexing pattern 1, a UE monitors PDCCH in the Type0-PDCCH CSS set over two consecutive slots starting from slot $n_0$. For SS/PBCH block with index i, the UE determines an index of slot $n_0$ as

$$n_0 = (O \cdot 2^{\mu} + \lfloor i \cdot M \rfloor) \bmod N_{slot}^{frame,\mu}$$

that is in a frame with system frame number (SFN) $SFN_C$

satisfying $SFN_C \bmod 2 = 0$ if $\lfloor (O \cdot 2^{\mu} + \lfloor i \cdot M \rfloor)/N_{slot}^{frame,\mu} \rfloor \bmod 2 = 0$ or in a frame with SFN

satisfying $SFN_C \bmod 2 = 1$ if $\lfloor (O \cdot 2^{\mu} + \lfloor i \cdot M \rfloor)/N_{slot}^{frame,\mu} \rfloor \bmod 2 = 1$. M and O are provided by Tables 13-11 and 13-12, and $\mu \in \{0, 1, 2, 3\}$ based on the SCS for PDCCH receptions in the CORESET [4, TS 38.211]. The index for the first symbol of the CORESET in slots $n_0$ and $n_0+1$ is the first symbol index provided by Tables 13-11 and 13-12.

For example, when the UE is configured with a CORESET for the Type 0 PDCCH CSS set through an MIB during the cell search process, the UE may determine a PDCCH MO and related information including the number of RBs and symbols in the CORESET from controlResourceSetZero of RRC IE pdcch-ConfigSIB1, searchSpaceZero, and related tables (Tables in 3GPP TS 38.213). If the multiplexing pattern of the SSB (SS/PBCH block) and CORESET is pattern 1, the PDCCH MO may be determined as a configurable pattern based on offset O and step index M. The MO may be located in two consecutive slots (i.e., slot index n_0 and index n_0+1) based on the index i of each SSB, which is determined as n_0=(O*2^$\mu$+floor (i*M) mod N_slot^(frame,$\mu$), where $\mu$ refers to the numerology (or SCS) for PDCCH reception in the corresponding CORESET.

At a specific point in time, slot #(n_0) is a slot included in Y slots in a slot group for multi-slot monitoring. However, at another specific point in time, the position of slot #(n_0) determined based on the SSB index may change, and slot #(n_0) may not be included in the Y slots in the slot group. For example, if the UE moves, the index of the best received SSB may change. Here, the best SSB may be, for example, an SSB with the highest measured reference signal received power (RSRP) among received SSBs.

To monitor all SS sets including the Type 0 CSS set in the Y slots within the slot group, if the position of slot #(n_0) changes, the relative positions of the Y slots within the slot group also need to change. In an embodiment, proposed are methods of changing the positions of Y slots and related procedures. In the proposed methods described later, the position of a slot group in the time domain is expressed as X_loc, and the length of the slot group is expressed as X_dur or simply X. In addition, the positions of Y slots within the slot group are expressed as Y_loc, and the length of the Y slots is expressed as Y_dur or simply Y. If there are two or more Y slots in the slot group, the positions and lengths of the first Y slots are expressed as Y1_loc and Y1_dur (Y1), respectively, and the positions and lengths of the second Y slots are expressed as Y2_loc and Y2_dur (Y2), respectively.

In the proposed methods described later, the positions of Y within the slot group: Y#(0), ...,Y#(M-1) may be simply expressed as {Y#(m)}, where m may have values from 0 to Y_dur-1. {Y#(m)} does not mean the position of Y in a frame, subframe and/or slot group at a specific point in time, but {Y#(m)} means the general positions of Y slots within the slot group consisting of X slots. Unless special events occur, it may be assumed that the positions of Y slots remain the same in each slot group. The special events may include situations such as RRC (re)establishment, handover, BWP switching, and/or beam failure recovery, as well as changes in the positions of Y due to UE mobility described later.

In the proposed methods described later, the Y positions within the slot group may be understood as a slot duration including a PDCCH MO. Alternatively, the Y positions within the slot group may also be understood as limiting an SS set to within Y.

## 1-(1) Method of defining consecutive Y slots for PDCCH MO within slot group

When multi-slot monitoring is configured within a slot group (X slots) and Y slots including a PDCCH MO within the slot group, the Y slots may be represented in one of two ways.

Alt-1a: Y slots consist of consecutive slots in the time domain starting from a specific slot within a slot group. If the starting slot among the Y slots is Y#(0), the Y slots may be expressed as {Y#(0), Y#(1), ..., Y#(M-1)}, where M is Y_dur. If Y#(0) is slot #(n), Y#(m) is slot #(n+m). For example, if the SCS applied to a cell where PDCCH monitoring is performed is 960 kHz and if X_dur=8 and Y_dur=4, the Y slots may be composed of 4 slots starting from the first slot of the slot group as shown in FIG. 5(a). In addition, the Y slots may consist of four slots starting from the fifth (5-th) slot of the slot group as shown in FIG. 5(b). In FIGS. 5(a) and 5(b), if the first slot of the slot group is slot #(n), the Y slots in FIG. 5(a) are {Y#(0), Y#(1), Y#(2), Y#(3)}={slot #(n), slot #(n+1), slot #(n+2), slot #(n+3)}. The Y slots in FIG. 5(b) are {Y#(0), Y#(1), Y#(2), Y#(3)}={slot #(n+4), slot #(n+5), slot #(n+6), slot #(n+7)}.

Alt-1b: Y slots consist of consecutive slots with wrap-around applied in the time domain, starting from a specific slot in the slot group. If the starting slot among the Y slots is Y#(0), Y may be expressed as {Y#(0), Y#(1), ..., Y#(M-1)}. When the slot index of the first slot of the slot group including the Y slots is k, if Y#(0) is slot #(k+a), Y#(m) is slot #(k+mod(a+m,X)), where M is Y_dur, and mod(a,b) means the remainder when a is divided by b. For example, if the SCS applied to a cell where PDCCH monitoring is performed is 960 kHz and if X_dur=8 and Y_dur=4, the Y slots may consist of four slots starting from the eighth slot of the slot group as shown in FIG. 5(c). The Y slots may be {Y#(0), Y#(1), Y#(2), Y#(3)}={slot #(7), slot #(0), slot #(1), slot #(2)}.

Referring to the above two definitions, the position of the PDCCH MO within the slot group may be included in the Y consecutive slots. Alternatively, the position of the PDCCH MO may be included in consecutive slots with wrap-around applied. That is, if the first slot among X slots is slot #(k) and if the first slot among Y slots, Y#(0) is slot #(k+a), the m-th slot among the Y slots, Y#(m) is slot #(k+mod(a+m,X)).

In the present disclosure, when Y slots are expressed as "consecutive slots," the Y slots may be consecutive slots within a slot group or consecutive slots with wrap-around applied within a slot group.

Additionally, if the index of the best SSB received by the UE at a specific point in time changes, the positions of Y slots within a slot group may change based on slot #(n_0) corresponding to the SSB index. Methods of determining the positions of Y slots will be described in the following proposals. Herein, the positions of the changed Y slots are expressed as Z#(0), ..., Z#(M-1) to distinguish the positions of the changed Y slots from the positions of the Y slots before the change. As described above, Alt-1a and/or Alt-1b may be used to express the Y slots in the slot group. If the position of Y before the change, {Y#(m)} follows Alt-1a, the position of Y after the change, {Z#(m)} is also expressed based on Alt-1a. If {Y#(m)} follows Alt-1b, {Z#(m)} also needs to be expressed based on Alt-1b.

If separate Y slots are defined for each SS set type within a slot group, the number of slots in a PDCCH MO may vary depending on the position and length of each value of Y. For example, if an SS set is divided into two groups, the Y slots of one group may be located at Y1#(0), ..., Y1#(M-1), and the Y slots of the other group may be located at Y2#(0), ..., Y2#(N-1). The MO (for all SS sets) of the corresponding slot group may be determined as a union of [{Y1#(m)}, {Y2#(n)}]. A BD/CCE budget may be defined in the union duration. Alternatively, the BD/CCE budget is defined in the duration of the slot group, whereas overbooking/dropping may be performed in the union duration. If two types of Y slots fully overlap with each other (when {Y1#(m)} D {Y2#(n)} or {Y1#(m)} C {Y2#(n)}), the MO (for all SS sets) of the slot group may be determined as max(Y1_dur,Y2_dur) or max(Y1,Y2). The BD/CCE budget may be defined in the duration of max(Y1_dur,Y2_dur) or max(Y1,Y2). Alternatively, the BD/CCE budget is defined in the duration of the slot group, but overbooking/dropping may be performed in the duration of max(Y1_dur,Y2_dur) or max(Y1,Y2).

## 1-(2) Type 0 PDCCH CSS set monitoring method

Proposal 1-(2)-1

For Type 0 CSS set monitoring, if an SSB/CORESET multiplexing pattern is pattern 1, PDCCH monitoring is performed in two consecutive slots. Y slots for two slots for PDCCH monitoring may be defined as two consecutive with wrap-around applied within a slot group. For example, if slot #(n_0) for a specific SSB index (for Type 0 PDCCH monitoring) is slot #(7) in FIG. 5(c), the MO for the Type 0 CSS set may be located in slot #(7) and slot #(0) in the slot group. A BD/CCE budget is determined on a slot group basis.

In Proposal 1-(2)-1, Type 0 PDCCH CSS set monitoring related to the specific SSB index may be performed in slot #(7) and slot #(8). In general, slot #(n_0+1) for a specific SSB index and slot #(n_0) for another specific SSB index may belong to one slot group. In other words, Type 0 CSS set monitoring associated with specific SSB index #(s) is performed on slot #(n_0) (i.e., the last slot of the k-th slot group) and slot #(n_0+1) (i.e., the first slot of the (k+1)-th slot group), but a BD/CCE budget check (overbooking check or SS allocation for SS set dropping) is performed on a slot group basis. More generally, for SSB/CORESET multiplexing pattern 1, monitoring for the Type 0 PDCCH CSS set is performed in slot #(n_0) related to the specific SSB index and slot #(n_0+1), which is the next slot. However, the two slots may belong to different slot groups (or different subframes), and the BD/CCE budget check and/or dropping due to overbooking may be performed on a slot group basis.

Proposal 1-(2)-2

In conventional NR rel-15, Type 0 CSS set monitoring having applied SSB/CORESET multiplexing pattern 1 therein is performed in two consecutive slots, that is, slot #(n_0) and slot #(n_0+1). Even for multi-slot monitoring, monitoring may be performed in two consecutive slots. However, if slot #(n_0) is the last slot of a specific slot group (or the last slot of a specific subframe), slot #(n_0) and slot #(n_0+1) may be located in different slot groups (or located in different subframes). Thus, a monitoring method different from the conventional one may be needed.

As a first method proposed, the UE may exceptionally perform Type 0 CSS set monitoring only in slot #(n_0) if slot #(n_0) is the last slot of the specific slot group.

As a second method, the UE may exceptionally perform Type 0 CSS set monitoring in slot #(n_0) and slot #(n_0+X) if slot #(n_0) is the last slot of the specific slot group. X represents the length (duration) of the slot group.

As a third method, the UE may exceptionally perform Type 0 CSS set monitoring in slot #(n_0) and slot #(n_0 1) if slot #(n_0) is the last slot of the specific slot group.

In the above three methods, when slot #(n_0) for the best SSB index is not the last slot of the slot group (or subframe), the UE monitors the Type 0 PDCCH CSS set in two consecutive slots starting from slot #(n_0) according to the conventional monitoring method. When the best SSB index changes and slot #(n_0) is located in the last slot of the slot group (or subframe), the UE exceptionally changes the monitoring method thereof. The changed monitoring operation continues until the position of slot #(n_0) changes again. If the best SSB index changes again and slot #(n_0) is no longer located in the last slot of the slot group (or subframe), the UE may monitor the PDCCH in slot #(n_0) and slot #(n_0+1) as in the prior art.

Proposal 1-(2)-3

To avoid the issue mentioned in Proposal 1-(2)-2 (that is, to prevent the following cases: when slot #(n_0) becomes the last slot of the specific slot group due to a change in the index of the best SSB or when slot #(n_0) is the last slot of the specific subframe), the MO of the Type 0 PDCCH CSS set may change. When the MO of the Type 0 PDCCH CSS set is configured in multi-slot monitoring, the last slot of the slot group (or the last slot of the subframe) may not be set to the MO.

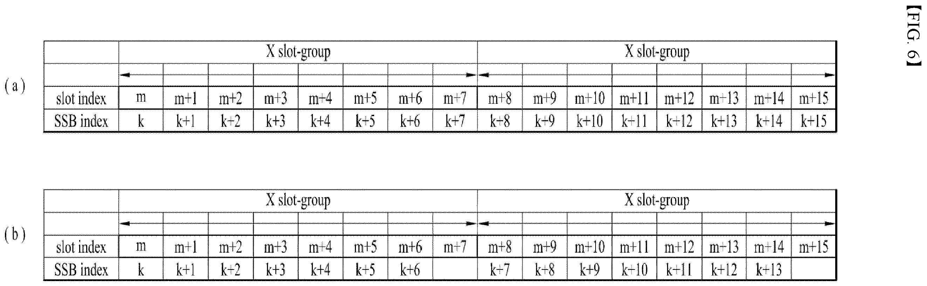

According to conventional rel-15 NR, Type 0 PDCCH monitoring may be linked to 1, 2, or 0.5 SSBs for each slot starting from the starting slot. If the rule is applied to multi-slot monitoring, the starting slot of Type 0 PDCCH monitoring may be located in the last slot of the slot group (or subframe). However, in multi-slot monitoring, the last slot of the slot group (or subframe) may not be linked to the SSB index. For example, assuming that one SSB index is linked for each slot, the SSB index is linked to all slot indices as shown in FIG. 6(a) in the prior art. In the modified method, the SSB index may be linked to the slot index excluding the last slot of the slot group as shown in FIG. 6(b).

If the modified SSB index linking method is used, the time required to link a predetermined number (e.g., 64) of SSB indices to all slot indices from the lowest index to the highest index may vary depending on the SCS and X dur, which may cause changes in the SSB pattern/configuration.

**1-(3) When MO for all types of SS sets is defined based on common Y slots within slot group and multi-slot monitoring is performed**

When multi-slot monitoring is performed based on a slot group and common Y slots including a PDCCH MO for all types of SS sets (in this case, the Y slots consist of M consecutive slots starting from a specific slot within the slot group), if the slot index (slot #(n_0)) linked to the index of the best SSB changes due to the movement of the UE, a time offset may be applied to the position of Y within the slot group (i.e., {Y#(m)}, m=0, 1, ..., M-1) such that slot #(n_0) may be included in the Y slots. The Y slots consist of M consecutive slots, and the positions of the Y slots after the application of the time offset may be expressed as {Z#(m)}=Z#(0), ..., Z#(M-1).

The application of the time offset may be understood as a process of changing the position of {Y#(m)} to {Z#(m)}, which may be expressed as {Z#(m)} = {Y#(m)}+time_offset. Specific procedures or operation methods for the application of the time offset will be described in the following proposed methods. The actual position of Y may change after a certain application delay passes from the triggering point of applying the time offset.

**1-(3)-1 Method of determining changed position of Y ({Z#(m)}) through time offset**

1-(3)-1-(a): When slot #(n_0), which is the monitoring location of a Type 0 PDCCH CSS set, changes due to a change in the index of the best SSB at a specific point in time, if Z#(0)=slot #(n_0) and Z#(m)= slot #(n_0+m), the changed position of Y {Z#(m)} may be determined. Alternatively, as described above, Z#(0)=slot #(n_0) and Z#(m)=slot #(k+mod(a+m,X)). The slot index of slot #(n_0) is assumed to be k+a, and the index of the first slot of the corresponding slot group is assumed to be k. The changed position of Y may be maintained until the index of the best SSB changes at another specific point in time. In this case, the time offset may be expressed as 'Z#(0)-Y#(0)'.

1-(3)-1-(b)-alt1: In the process of 1-(3)-1-(a), if slot #(n_0) linked to the changed index of the best SSB is included in {Y#(m)}, it may be determined that {Z#(m)} = {Y#(m)}. That is, in this case, even if the index of the best SSB changes and slot #(n_0) linked thereto also changes, the position of Y in the slot group does not change. However, if slot #(n_0) is not included in {Y#(m)}, {Z#(m)} may be determined according to 1-(3)-1-(a). The changed position of Y may be maintained until the index of the best SSB changes at another specific point in time. In this case, the time offset may be expressed as 'Z#(0)-Y#(0)'. For SSB/CORESET multiplexing pattern 1, if Type 0 PDCCH monitoring is not performed in two consecutive slots (slot #(n_0) and slot #(n_0+1)), the embodiment in 1-(3)-1-(b)-alt1 may be applied. This may correspond to the following cases: when PDCCH monitoring is performed only in one slot, slot #(n_0) rather than two consecutive slots or when PDCCH monitoring is performed in two non-consecutive slots (slot #(n_0) and slot #(n_0+X)). Alternatively, the embodiment of 1-(3)-1-(b)-alt1 may be applied even when Type 0 PDCCH monitoring is performed in only one slot as in conventional SSB/CORESET multiplexing pattern 3.

1-(3)-1-(b)-alt2: In the process of 1-(3)-1-(a), if both slot #(n_0) and slot #(n_0+1) linked to the changed index of the best SSB are included in {Y#(m)}, it may be determined that {Z#(m)} = {Y#(m)}. Therefore, even if the index of the best SSB changes and thus slot #(n_0) linked thereto also changes, the positions of the Y slots in the slot group do not change. However, if slot #(n_0) or slot #(n_0+1) is not included in {Y#(m)}, {Z#(m)} may be determined according to 1-(3)-1-(a). The changed position of Y may be maintained until the index of the best SSB changes at another specific point in time. In this case, the time offset may be expressed as 'Z#(0)-Y#(0)'. When SSB/CORESET multiplexing pattern 1 is used and Type 0 PDCCH CSS set monitoring is performed in two consecutive slots (slot #(n_0) and slot #(n_0+1)), the embodiment in 1-(3)-1-(b)-alt2 may be applied.

1-(3)-1-(c): For X slots in the slot group, when the index of each slot is n, n+1, ..., and n+X-1, if the index of a slot where the first slot among the Y slots is capable of being located is limited to n+c*Y_dur (where c is an integer greater than 0), the position of {Y#(m)} within the slot group may be limited to one of X dur/Y dur possible positions. That is, if Y dur is a divisor of X dur (including Y_dur=1) and the slot group consisting of X slots is divided into X dur/Y dur sub-regions (which do not overlap with each other and becomes the entire slot group when combined), {Y#(m)} may be one of region #(1) to region #(X_dur/Y_dur). If slot #(n_0), which is the monitoring location of the Type 0 PDCCH CSS set, changes due to a change in the index of the best SSB at a specific point in time, {Z#(m)} may be determined as a sub-region where slot #(n_0) linked to the changed SSB index is located. In addition, if slot #(n_0) is the last slot of the sub-region, Type 0 PDCCH monitoring for the corresponding SSB index may exceptionally be performed only in slot #(n_0). Alternatively, Type 0 PDCCH monitoring may be performed in slot #(n_0) and slot #(n_0+X).

1-(3)-1-(d): When the location for monitoring a PDCCH within the slot group (i.e., the positions of the Y slots within the slot group for all types of CSS sets) is determined, when the monitoring location (slot #(n_0)) of the Type 0 PDCCH CSS set changes due to a change in the index of the best SSB at a specific point in time, or when the corresponding CORESET TCI state changes, the UE may change the positions of the corresponding Y slots. The changed positions of the Y slots may be one of the candidate positions of the Y slots in the slot group. The candidate positions may be predefined, configured by higher layer signaling such as RRC, or indicated by DCI. The candidate positions may be determined as disjoint positions. Alternatively, the candidate positions may be determined as partially overlapping positions. When the candidate positions of the Y slots are configured and/or indicated to the UE through RRC, the position of the first slot among the candidate positions may be configured and/or indicated. The maximum number of the candidate positions of the Y slots may be set to a specific number depending on the SCS configured for PDCCH monitoring, the length of the slot group, and/or the length of the Y slots. For example, when an SCS of 960 kHz, X=8, and Y=4 are configured in a cell where PDCCH monitoring is performed, even if up to five different Y slots are capable of being located within the slot group (e.g., 5 or 7 slots), only two of the five positions may be predefined as the candidate positions for Y, configured by RRC, or configured and/or indicated by DCI. As an embodiment therefor, the BS (gNB) may indicate the candidate positions of the Y slots to the UE through RRC. Alternatively, the BS may indicate to the UE the current positions of the Y slots and the candidate positions of the Y slots for change in the future through RRC. Next, the UE may change the positions of the Y slots to appropriate positions among the configured candidate positions based on the position of slot #(n_0) or changes in the related CORESET TCI state. As another embodiment therefor, the candidate positions of the Y slots within the slot group may be predefined to be disjoint. For example, if the length of Y is Y=4, the candidate positions of the Y slots may be {four consecutive slots starting from slot #(0)} and {four consecutive slots starting from slot #(4). The UE may determine and/or change the PDCCH monitoring positions (the position of the Y slots) to appropriate positions among the configured candidate positions. In the embodiment of 1-(3)-1-(d), when the position of slot #(n_0) according to the index of the best SSB changes (or when the corresponding CORESET TCI state changes), the UE may check whether slot #(n_0) is included in the Y slots for monitoring the current PDCCH (or check whether slot #(n_0) and slot #(n_0+1) are included). If slot #(n_0) is included, the positions of the Y slots may not change. If slot #(n_0) is not included, the positions of the Y slots may change to one of the candidate positions. In the embodiment of 1-(3)-1-(d), when the positions of the Y slots change, the UE may change the positions of the Y slots to candidate positions closest to the current positions of the Y slots among the candidate positions. For example, among first slots for each candidate position, the position of the first slot of the changed Y slots may be determined as the position of the first slot of the current Y slots. As an embodiment therefor, the BS (gNB) indicates the candidate positions of the Y slots to the UE through RRC. Alternatively, the BS may indicate to the UE the current positions of the Y slots and the candidate positions of the Y slots for change in the future through RRC. Next, if the position of slot #(n_0) changes or the related CORESET TCI state changes, the UE may check whether slot #(n_0) and/or slot #(n_0+1) are included in the Y slots. If slot #(n_0) and/or slot #(n_0+1) are included, the UE does not change the position of Y. If slot #(n_0) and/or slot #(n_0+1) are not included, the positions of the Y slots may change to the candidate positions closest to the current positions of the Y slots among the configured candidate positions. As another embodiment therefor, the candidate positions of the Y slots within a slot group may be predefined to be disjoint. For example, if the length of Y is Y=4, the candidate positions of the Y slots are {four consecutive slots starting from slot #(0)} and {four consecutive slots starting from slot #(4)}. The UE may determine (or change) the PDCCH monitoring positions to appropriate positions among the configured candidate positions. When the positions of the Y slots change, the UE checks whether slot #(n_0) and/or slot #(n_0+1) are included in the current Y slots. If slot #(n_0) and/or slot #(n_0+1) are included, the UE does not change the positions of the Y slots. If slot #(n_0) and/or slot #(n_0+1) are not included, the positions of the Y slots may change to the candidate positions closest to the current positions of the Y slots among the configured candidate positions.

## 1-(3)-2 Change triggering of time offset application and SS set configuration

The positions of Y slots within a slot group may change in situations where the index of the best SSB changes due to the movement of the UE. In this case, the BS may configure and/or instruct the UE to apply a time offset and change the position of Y through a separate RRC configuration, MAC-CE activation, or DCI indication. Alternatively, the UE may operate in an event-triggered manner. Specifically, the UE may detect and report to the BS (gNB) that the index of the best SSB changes based on the strength of a received signal. Specifically, when the UE reports SS-RSRP and/or an SSB index through a Layer 1 (L1) report or a Layer 3 (L3) report, reporting that the index of the best SSB changes may be an event that causes a time offset. Alternatively, when the UE reports the best SSB and the second best SSB to the BS, reporting that the index of the best SSB changes under specific conditions (e.g., when the difference between the two report values is greater than or equal to a specific threshold) may be an event that causes a time offset. Alternatively, the beam failure recovery process may be an event that causes a time offset. For example, the occurrence of an event may be determined to be after a specific time (e.g., X symbols) from a point in time at which the UE finds a new beam after beam failure and transmits a PUCCH (or PRACH) corresponding to the new beam.

In the above cases, the UE may operate by determining the presence or absence of a time offset and/or the value of the time offset without separate signaling. Alternatively, the UE may receive the presence or absence of the time offset and/or the value of the time offset from the BS through a separate RRC configuration, MAC-CE, or DCI indication.

When the position of Y changes due to the time offset, a part of the SS set configuration changes. Alternatively, there may be restrictions on the SS set configuration to apply the time offset.

For example, when the position of Y in the slot group changes through the MAC-CE, the parameters of the SS set configuration such as periodicity, offset, and duration need to be interpreted to align with the changed positions of the Y slots. Alternatively, the parameters such as periodicity, offset, and duration may be set to limited values by considering the positions of the Y slots before change and the positions of the Y slots to be changed.

As another method, if the time offset occurs after the parameters are defined based on when the time offset value is 0, the BS may add the time offset to some of the configured/indicated parameter values. Alternatively, the UE may add the time offset to some of the configured/indicated parameter values. That is, the SS set configuration parameters may be a function of the time offset. For example, if the position of Y within X is shifted two slots back, the periodicity remains unchanged, but the offset may be adjusted by additional two slots.

As another method, a plurality of sets of SS set configuration parameters may be configured, and the link relationship between each parameter set and the time offset value may be predetermined. This allows for the use of an appropriate SS set configuration parameter set based on the extent of the time offset. Alternatively, after multiple parameter sets are configured, a specific set may be configured/indicated through an explicit method such as DCI.

When the TCI state corresponding to a CORESET is changed by the MAC-CE, the positions of the Y slots and SS set configuration parameter values may be changed according to the changed TCI state. In this case, the time offset value of Y corresponding to each TCI state may be preconfigured, and the time offset may be applied according to the TCI state changed by the MAC-CE. The SS set configuration parameters need to be changed. Similar to the method described above, the association between a specific parameter and the time offset may be predefined. Alternatively, after multiple SS set configuration sets are defined and a link relationship between the SS set configuration sets and TCI states is created, related parameter sets may be applied for each changed TCI state.

Additionally, to improve the efficiency of the operation of changing slot #n_0 linked to the index of the best SSB, the UE may report change of n_0 to the BS. That is, if slot #n_0 changes, the UE may transmit a (aperiodic) L1 report to the BS (i.e., event triggered L1 report).

As another method, the UE may periodically report information on slot #n_0 linked to the index of the current best SSB to the BS. In this case, the operation of changing the positions of the Y1 and/or Y2 slots due to the change of n_0 after a specific time from when the UE transmits a periodic report may be executed simultaneously by both the BS and UE. The specific time may be determined based on t1, D, and/or t2 described above. The L1 report may include the index of slot #n_0, the offset from the first slot of the corresponding slot group to n_0, the difference between the index of slot #n_0 before the change and slot #n_0 after the change, or the index of a slot preferred by the UE (as the starting point of the monitoring window). Alternatively, the L1 report may include the index of the first slot among the Y slots in the slot group, the offset from the first slot of the corresponding slot group to the first slot among the Y slots, the difference between the first slot among the Y slots before the change and the first slot among the Y slots after the change, or the index of the first slot among the Y slots preferred by the UE.

**1-(3)-3 Triggering point in time, application point in time, and application delay of time offset**

To change the positions of Y slots in a slot group based on a time offset, a triggering reference point in time (=t1), a time offset application point in time (=t2), and an application delay (= D) required between t1 and t2 need be determined. Based on these values, the BS and UE may accurately determine the point in time at which the positions of the Y slots change.

First, the triggering reference point in time (=t1) may be determined according to one of the following methods, depending on the triggering entity (BS/UE) and the triggering method.

- The point in time at which an RRC (re)configuration is indicated (i.e., a slot (or symbol) in which the UE receives a data/control channel including the RRC (re)configuration that triggers the application of the time offset or the starting/ending boundary of a slot group (or subframe) including the slot).
- The point in time at which the MAC-CE is activated and/or indicated (i.e., a slot (or symbol) at which the UE receives the MAC-CE activation/indication that triggers the time offset application or the slot starting/ending boundary of a slot group (or subframe) including the slot). Alternatively, the triggering point in time may be determined to be a specific time (e.g., 3 msec) or a specific number of symbols and/or slots from the point in time at which the MAC-CE activation and/or instruction is received. In this case, the specific time and specific number may be predefined according to the SCS for multi-slot monitoring.

- The triggering point in time may be determined to be after the point in time at which the DCI indication is provided (i.e., a slot or symbol at which the UE receives a separate DCI indication that triggers the time offset application or the starting/ending boundary of a slot group (or subframe) including the slot). Alternatively, after a specific time (e.g., the specific time may be a certain number of slots, a certain number of slot groups, or a certain time (msec)) from the point in time of receiving the DCI, the UE may be configured to apply the time offset to change the positions of the Y slots in the slot group. In this case, the specific time may be predefined according to the SCS for multi-slot monitoring.

- When the time offset is triggered by the UE through the L1 report or L3 report, the reporting point in time may be determined as the triggering reference point in time. Alternatively, the starting or ending boundary of a slot, slot group, or subframe including the corresponding reporting point in time (or a slot, slot group, or subframe corresponding to the reporting point in time) may be determined as the reference point in time.

The application delay (=D) refers to the (minimum) delay required from the triggering (t1) until the UE applies the time offset to change the positions of the Y slots in the slot group. The delay D may be defined as the number of slots after t1. The delay D may be defined as the number of slot groups after t1 due to the characteristics of multi-slot monitoring (for example, the delay D may be predetermined as either the length of a slot group X or a multiple of X). Alternatively, similar to the application delay linked with other conventional MAC-CEs, the delay D may be set to an absolute time (msec). The delay D may be predefined according to the SCS of the monitored PDCCH or X dur and/or Y dur of multi-slot monitoring. Depending on the triggering entity/method, different application delays may be predefined.

The point in time (=t2) at which the time offset is applied may be determined as a specific time after the application delay from the triggering point in time (t1). The application of the time offset may mean that the positions of the Y slots within the slot group change. Specifically, t2 may be determined as the boundary of the earliest slot group (or subframe) in the time domain after the minimum delay D. Alternatively, t2 may be determined as the first MO of a Type 0 PDCCH linked to an SSB index after the boundary of the earliest slot group (or subframe) in the time domain after D (which causes the time offset). For example, when a slot #(n_0) change event is triggered (by the UE itself or by the configuration/indication of the gNB), after the delay D from the triggering point in time (a slot group corresponding to the triggering point in time or the starting/ending boundary of the next slot group), new Y slots are located from the earliest slot group boundary in the time domain (i.e., {Z#(m)}), and PDCCH monitoring may be performed in the new Y slots.

After t2 at which the time offset is applied and the positions of the Y slots in the slot group change to {Z#(m)}, PDCCH monitoring can be performed only for {Z#(m)}. However, after the triggering point in time, it is necessary to determine a location where PDCCH monitoring needs to be performed before t2. As one natural method, an operation in which PDCCH monitoring is performed at the positions of the Y slots (i.e., {Y#(m)}) for all SS sets from t1 to t2 may be considered. In particular, for SS sets such as a UE-specific SS, it may be considered that the conventional operation is performed before the application point in time (t2), but the PDCCH is monitored at the changed positions of the Y slots after the point in time at which the positions of the Y slots are expected to be changed stably, thereby avoiding incorrect control information

For CSS set types (and more particularly, for Type 0 PDCCH monitoring), monitoring needs to be performed at the changed positions of the Y slots immediately after the triggering point in time. To this end, the UE may monitor a specific SS set (e.g., a group including a Type 0 CSS set) at the current positions of the Y slots (i.e., {Y#(m)}) from t1 to time t2. The UE may monitor another specific SS set (e.g., a group that does not include the Type 0 CSS set) at the changed positions of the Y slots (i.e., {Z#(m)}).

Depending on the position of slot #(n_0) corresponding to the changed SSB index, {Y#(m)} and {Z#(m)} may completely overlap, partially overlap, or may not overlap. For the SS set group including the Type 0 CSS set, the UE may perform monitoring in {Z#(m)}. For other SS set groups (represented as a group 1 SS), the UE may operate as follows depending on whether there is an overlap.

- If Union ({Z#(m)}, {Y#(m)}) == {Y#(m)}, the group 1 SS is monitored in {Y#(m)} in the same way as before applying the time offset..

- If Union ({Z#(m)}, {Y#(m)}) != {Y#(m)}, the group 1 SS is monitored in some slots including Intersection ({Z#(m)}, {Y#(m)}) among {Y#(m)}, and PDCCH monitoring is dropped in other slots. In this case, the maximum number of slots on which PDCCH monitoring is performed without being dropped may be X/2 (or configured Y dur).

- If Intersection ({Z#(m)}, {Y#(m)}) == 0, the group 1 SS is not monitored in the corresponding time duration. Alternatively, if changed slot #(n_0) is behind {Y#(m)} (in the time domain), PDCCH monitoring is not performed in some front slots of {Y#(m)}. That is, PDCCH monitoring is dropped therein. In addition, PDCCH monitoring is performed in the remaining slots of {Y#(m)}. If changed slot #(n_0) precedes {Y#(m)} (in the time domain), PDCCH monitoring is not performed in some rear slots of {Y#(m)}. That is, the PDCCH monitoring is dropped therein. PDCCH monitoring is performed in the remaining slots of {Y#(m)}.

Additionally, t2 may vary depending on whether the relative position of Z#(0) in the slot group precedes or follows the relative position of Y#(0). For example, when the index of the slot group (or subframe) corresponding to t1 is #n,

- If the relative position ofZ#(0) precedes the relative position of Y#(0), the boundary of the earliest slot group (or subframe) after D from the boundary of slot group (or subframe) #(n) may be t2.
- If the relative position of Z#(0) follows the relative position of Y#(0), the boundary of the earliest slot group after D from the boundary of slot group (or subframe) #(n+1) may be t2.

Accordingly, it is possible to avoid an increase in the monitoring burden of the UE in a specific slot group due to the positions of the Y slots before/after change.

Additionally, in a mixed SCS scenario, it may be necessary to select which SCS the triggering reference point in time (t1), application delay (D), and application point in time (t2) needs to be determined based on. For example, for multi-cell operations such as carrier aggregation (CA), a situation where each cell has a different numerology (i.e., SCS) may be considered. In this case, the above-described method of determining t1, D, and t2 may be applied based on the lowest or highest SCS among the configured SCSs of DL cells as needed. In the mixed SCS scenario, if conservative and/or stable operations of the BS and UE are required, each device may operate based on the lowest SCS (in spite of the inefficiency of the system such as the relatively slow application speed of the time offset). If rapid time offset application is required (despite some burdens on the BS/UE), the operation based on the highest SCS may be more suitable. If the SCS of a primary cell (PCell) (or primary secondary cell (PSCell)) is different from that of the S cell, the operation may be based on the SCS of the PCell (or PSCell). The reference SCS may be explicitly configured/indicated through signaling such as separate RRC or DCI.

**1-(3)-4 Multi-cell operation**

The proposed methods described above, although not explicitly indicated, have been explained with reference to a PCell or PSCell. However, for a secondary cell (SCell) that are aggregated with the above cells, the position of a PDCCH MO may also be changed based on the application of a time offset. The following methods may be applied.

In a multi-cell operation scenario, the proposed methods may be independently applied to PCells, PSCells, or SCells. Specifically, the time offset, application delay, etc., may be determined independently.

In the multi-cell operation scenario, the proposed methods are applied independently to the PCell (or PSCell), while in the SCell aggregated with the PCell (or PSCell), the time offset, application delay, etc., determined for the PCell (or PSCell) may be used. For the link operation, a separate configuration/indication method such as RRC may be used for enabling (i.e., the SCell is linked to the PCell)/disabling (i.e., the SCell is separately configured). In particular, for the time offset, the value independently determined for the PCell (or PSCell) according to the proposed methods described above may be uniformly applied to the SCell. For the application delay, the value independently determined for the PCell (or PSCell) may be uniformly applied to the SCell. Alternatively, a value larger than the one determined for the PCell (or PSCell) (or a point in time following t2) may also be applied to the SCell. Whether to apply the same value may be signaled separately. The time offset, application delay, etc., may be determined for the PSCell (independently of the PCell), and the time offset, application delay, etc. may be used for the SCell. Alternatively, the time offset, application delay, etc., may be independently determined only for the PCell and then used uniformly for both the PSCell and SCell.

- In the multi-cell operation scenario, if multiple SCells are configured for the UE, some or all of the configured SCells may be grouped together. The proposed methods may be uniformly applied to each group. The values determined for the PCell (or PSCell) may be determined as the values of the time offset and/or application delay applied to a specific group of SCells. Alternatively, the values of the time offset and/or application delay applied to a specific group of SCells may be independently determined for specific SCells for each group. Depending on the value determined/applied for the PCell/PSCell or a representative specific SCell of the group, the time offset, application delay, etc. are applied to the SCells within the group. Accordingly, the positions of Y slots within the slot group may change. A specific SCell for determining values such as the time offset for each group may be arbitrarily configured/indicated/determined within the group or predetermined for each group. (For example, after the maximum number of SCells capable of being included in a group is predefined, the SCell with the lowest cell ID for each group may be determined as the representative SCell). Alternatively, if the time offset is triggered in any SCell in the group and the positions of the Y slots in the slot group change, the time offset of all SCells in the group may be triggered, and the positions of the Y slots of all SCells may change. As an embodiment therefor, when SCells #1, #2, #3, and #4 are configured to the UE, SCells #1 to #4 may be grouped into one group, and among SCells #1, #2, #3, and #4, SCell #1 may be the representative SCell. If the time offset of SCell #1 changes, the time offsets of SCell #2, #3, and #4 may also change to the same value and then applied.

Additionally, in a CA scenario, it may be possible to determine and apply the time offset of another specific cell (with multi-slot monitoring) based on the MO in a specific cell (without multi-slot monitoring). For example, when per-slot or per-span monitoring is configured on the PCell (or PSCell) and multi-slot monitoring is configured on the SCell, the positions of the Y slots, which are the monitoring duration of the SCell, may be changed based on the time offset in order to align the MO (or monitoring time duration) of the SCell according to the MO of the PCell/PSCell (or non-monitoring time duration).

## 1-(4) When MO for each SS set is defined using each value of Y for each group of specific SS set type within slot group and multi-slot monitoring is performed

When multi-slot monitoring is performed based on a slot group and individual Y slots for each specific SS set type of group (in this case, the Y slots consist of a consecutive number of slots starting from a specific slot within each slot group), if the slot index (i.e. slot #(n_0)) linked to the index of the best SSB changes due to the movement of the UE, a time offset may be applied to the position of each Y slot within the slot group such that slot #(n_0) is be included in each Y slot (or some specific Y slots). At this time, the Y slots may be expressed as Y1, Y2, etc. for convenience of explanation. The individual Y slots may operate with different starting slot positions and different numbers of consecutive slots. The specific SS set type of group, for example, a group 1 SS includes a Type 1 CSS with a dedicated RRC configuration, a Type 3 CSS set, and a UE-specific SS set. A group 2 SS may include a Type 1 CSS with no dedicated RRC configuration, a Type 0 CSS set, a Type 0A CSS set, and a Type 2 CSS set. The SS set types of groups are not limited thereto.

For convenience of explanation, the present disclosure assumes two different Y1 and Y2 in each slot group. It is assumed that the group 1 SS and group 2 SS mentioned above are linked to Y1 and Y2, respectively. In addition, it is assumed that Y1 is M consecutive slots and Y2 is N consecutive slots. Accordingly, the positions of Y1 slots within the slot group may be expressed as {Y1#(m)}=Y1#(0), ..., Y1#(M-1). The positions of Y2 slots within the slot group may be expressed as {Y2#(n)}=Y2#(0), ..., Y2#(N-1). Additionally, for convenience of explanation, the changed positions of Y1 and Y2 after the application of the time offset are {Z1#(m)}=Z1#(0), ..., Z1#(M-1) and {Z2#(n)}=Z2#(0), ..., Z2#(N-1), respectively. The application of the time offset may be interpreted as a process of changing the position of {Y1#(m)} to {Z1#(m)} and/or the position of {Y2#(m)} to {Z2#(m)}. The application of the time offset may be expressed as {Z1#(m)}={Y1#(m)}+time_offset_1 and/or {Z2#(m)}={Y2#(m)}+time_offset_2. Specific procedures or operation methods related to the application of the time offset application may be accomplished according to the methods proposed below. The positions of Y1 and/or Y2 may change after a specific application delay from the triggering point in time for the time offset application.

Proposed methods 1-(4)-1 to 1-(4)-4, which will be described below, are methods applicable when MOs for different SS set groups are configured differently depending on SS set types. Proposed methods 1-(4)-1 to 1-(4)-4 may be understood as expanded methods based on methods 1-(3)-1 to 1-(3)-4 described above. In the proposed methods, provided are methods for determining a time offset triggering point in time, application delay, and application point in time for each SS set group and methods for determining monitoring locations thereat. For convenience of explanation, Y1 and Y2 may be described separately, or in some cases, Y1 and Y2 may be described without separation (however, even in this case, monitoring configurations may be independently established for Y1 and Y2 according to the proposed methods).

## 1-(4)-1 Method of determining changed positions of Y1 and Y2 (i.e., {Z1#(m)}, {Z2#(m)}) based on time offset

- When slot #(n_0), which is the monitoring location of a Type 0 PDCCH CSS set, changes due to a change in the index of the best SSB at a specific point in time due to the movement of the UE, the positions of Y1 slots may change after the positions of Y2 slots change (or the positions of the Y1 slots and the positions of the Y2 slots may change at the same time).
- Slot #(n_0) and slot #(n_0+1) linked to the changed SSB index are included in the changed Y2 slots. The changed Y2 slots may be expressed as Z2#(0) to Z2#(N-1). For example, if N=2, it may be satisfied that Z2#(0)=slot #(n_0), Z2#(1)=slot#(n_0+1). In this case, the time offset may be 'Z2#(0)-Y2#(0)'.
- 1-(4)-1-(a): When slot #(n_0), which is the monitoring location of the Type 0 PDCCH CSS set, changes due to a change in the index of the best SSB at a specific point in time, the changed positions {Z1#(m)} of the Y slots may be determined by configuring Z1#(0)=slot #(n_0) and Z1#(m)=slot #(n_0+m). Alternatively, as described above, Z1#(0)=slot #(n_0) and Z1#(m)=slot #(k+mod(a+m,X)) (in this case, the slot index of slot #(n0) is assumed to be k+a, and the index of the first slot of the corresponding slot group is assumed to be k). The changed positions of the Y1 slots may be maintained until the index of the best SSB changes at another specific point in time. The time offset may be expressed as 'Z1#(0)-Y1#(0)', which may mean the same value as 'Z2#(0)-Y2#(0)'.

- 1-(4)-1-(b)-alt1: In process (a), if slot #(n_0) linked to the changed index of the best SSB is included in {Y1#(m)}, it may be determined that {Z1#(m)} = {Y1#(m)}. That is, in this case, even if the index of the best SSB changes and slot #(n_0) linked thereto also changes, the positions of the Y1 slots in the slot group does not change. However, if slot #(n_0) is not included in {Y1#(m)}, {Z1#(m)} may be determined according to 1-(4)-1-(a). The changed position of Y1 may be maintained until the index of the best SSB changes at another specific point in time. In this case, the time offset may be expressed as 'Z1#(0)-Y1#(0)'. For SSB/CORESET multiplexing pattern 1, if Type 0 PDCCH monitoring is not performed in two consecutive slots (slot #(n_0) and slot #(n_0+1)), the embodiment may be applied. This may correspond to the following cases: when PDCCH monitoring is performed only in one slot, slot #(n_0) rather than two consecutive slots or when PDCCH monitoring is performed in two non-consecutive slots (slot #(n_0) and slot #(n_0+X)). Alternatively, the embodiment may be applied even when Type 0 PDCCH monitoring is performed in only one slot as in conventional SSB/CORESET multiplexing pattern 3.

- 1-(4)-1-(b)-alt2: In the process of 1-(4)-1-(a), if both slot #(n_0) and slot #(n_0+1) linked to the changed index of the best SSB are included in {Y1#(m)}, it may be determined that {Z1#(m)} = {Y1#(m)}. Therefore, even if the index of the best SSB changes and thus slot #(n_0) linked thereto also changes, the positions of the Y1 slots in the slot group do not change. However, if slot #(n_0) or slot #(n_0+1) is not included in {Y1#(m)}, {Z1#(m)} may be determined according to 1-(4)-1-(a). The changed position of Y1 may be maintained until the index of the best SSB changes at another specific point in time. In this case, the time offset may be expressed as 'Z1#(0)-Y1#(0)'. When SSB/CORESET multiplexing pattern 1 is used and Type 0 PDCCH CSS set monitoring is performed in two consecutive slots (slot #(n_0) and slot #(n_0+1)), the embodiment may be applied.

- 1-(4)-1-(c): If slot #(n_0), which is the monitoring location of the Type 0 PDCCH CSS set, changes due to a change in the index of the best SSB at a specific point in time, the changed positions of the Y slots {Z1#(m)} may be determined such that Z1#(M-1)=max(Z2#(N-1), Y1#(M-1)) and Z1#(m-1)=Z1#(m)-1 (where m = M-1, M-2, .., 2, 1). That is, by comparing the position of slot #(n_0+1) linked to the changed SSB and the existing position of Y, a later slot may be determined as the last slot of {Z1#(m)}. The changed positions of the Y1 slots may be maintained until the index of the best SSB changes at another specific point in time.

- 1-(4)-1-(d): For X slots in the slot group, when the index of each slot is n, n+1, ..., and n+X-1, if the index of a slot where the first slot among the Y1 slots is capable of being located is limited to n+c*Y1_dur (where c is an integer greater than 0), the position of {Y1#(m)} within the slot group may be limited to one of (X_dur/Y1_dur) possible positions. That is, if the slot group consisting of X slots is divided into (X_dur/Y1_dur) sub-regions (which do not overlap with each other and becomes the entire slot group when combined), {Y1#(m)} may be one of region #(1) to region #(X_dur/Y1_dur). If slot #(n_0), which is the monitoring location of the Type 0 PDCCH CSS set, changes due to a change in the index of the best SSB at a specific point in time, {Z#(m)} may be determined as a sub-region where slot #(n_0) linked to the changed SSB index is located. In addition, if slot #(n_0) is the last slot of the sub-region, Type 0 PDCCH monitoring for the corresponding SSB index may exceptionally be performed only in slot #(n_0). Alternatively, Type 0 PDCCH monitoring may be performed in slot #(n_0) and slot #(n_0+X).

- 1-(4)-1-(e): When the location for monitoring a PDCCH within the slot group (i.e., the position of Y1 for the group (1) SS and the position of Y2 for the group(2) SS) is determined, when the monitoring location (slot #(n_0)) of the Type 0 PDCCH CSS set changes due to a change in the index of the best SSB at a specific point in time, or when the corresponding CORESET TCI state changes, the UE may change the positions of Y1 and/or Y2 slots. The changed positions of the Y1 slots may be one of the candidate positions of the Y1 slots in the slot group. The candidate positions may be predefined, configured by higher layer signaling such as RRC, or indicated by DCI. The candidate positions may be determined as disjoint positions. Alternatively, the candidate positions may be determined as partially overlapping positions. The candidate positions may be determined based on the Y2 slots (or the positions of slot #(n_0) and/or slot #(n_0+1) linked to the SSB index). When the candidate positions of the Y1 slots are configured and/or indicated to the UE through RRC, the position of the first slot among the candidate positions may be configured and/or indicated. The maximum number of the candidate positions of the Y1 slots may be set to a specific number depending on the SCS configured for PDCCH monitoring, the length of the slot group, and/or the length of the Y1 slots (and/or Y2 slots). For example, when an SCS of 960 kHz, X=8, Y1=4, and Y2=2 are configured, even if up to five different Y1 slots are capable of being located within the slot group (e.g., 5 or 7 slots), only two of the five positions may be predefined as the candidate positions for the Y1 slots or configured and/or indicated by RRC/DCI. As an embodiment therefor, the BS (gNB) may indicate the candidate positions of the Y1 slots to the UE through RRC. Alternatively, the BS may indicate to the UE the current positions of the Y1 slots and the candidate positions of the Y1 slots for change in the future through RRC. Next, the UE may change the positions of the Y1 slots to positions among the configured candidate positions based on the positions of the Y2 slots (the position of slot #(n_0) or changes in the related CORESET TCI state). As another embodiment therefor, the candidate positions of the Y1 slots within the slot group may be predefined to be disjoint. For example, if the length of Y1 is Y1=4, the candidate positions of the Y1 slots may be {four consecutive slots starting from slot #(0)} and {four consecutive slots starting from slot #(4). The UE may determine (or change) one of the configured candidate positions as the PDCCH monitoring position. According to the above method, when the position of slot #(n_0) according to the index of the best SSB changes (when the corresponding CORESET TCI state changes or when the position of Y2 changes), the UE may check whether slot #(n_0) is included in the Y1 slots for monitoring the current PDCCH (check whether slot #(n_0) and slot #(n_0+1) are included or check whether the Y2 slots are included). If slot #(n_0) is included, the positions of the Y1 slots may not change. If slot #(n0) and/or slot #(n0+1) or the Y2 slots are not included, the positions of the Y1 slots may change to one of the candidate positions. According to the above method, when the positions of the Y1 slots change, the UE may change the positions of the Y1 slots to candidate positions closest to the current positions of the Y1 slots among the candidate positions (that is, among first slots of the candidate positions, the position closest to the first slot of the current Y1 may be determined as the changed position of Y1). As an embodiment therefor, the BS (gNB) indicates the candidate positions of the Y1 slots to the UE through RRC. Alternatively, the BS may indicate to the UE the current positions of the Y1 slots and the candidate positions of the Y1 slots for change in the future through RRC. Next, if the positions of the Y2 slots (or if the position of slot #(n_0) or the related CORESET TCI state changes), the UE may check whether the positions of the Y2 slots (or slot #(n_0) and/or slot #(n_0+1)) are included in the Y slots. If slot #(n_0) and/or slot #(n_0+1) are included, the UE does not change the positions of the Y1 slots. If slot #(n_0) and/or slot #(n_0+1) are not included, the positions of the Y1 slots may change to the candidate positions closest to the current positions of the Y slots among the configured candidate positions. As another embodiment therefor, the candidate positions of the Y1 slots within a slot group may be predefined to be disjoint. For example, if the length of Y1 is Y1=4, the candidate positions of the Y1 slots are {four consecutive slots starting from slot #(0)} and {four consecutive slots starting from slot #(4)}. The UE may determine (or change) the PDCCH monitoring positions to appropriate positions of the Y1 slots among the configured candidate positions. When the positions of the Y1 slots change, the UE checks whether the positions of the Y2 slots (slot #(n_0) and/or slot #(n_0+1)) are included in the current Y slots. If the positions of the Y2 slots are included, the UE does not change the positions of the Y1 slots. If the positions of the Y2 slots are not included, the positions of the Y1 slots may change to the candidate positions closest to the current positions of the Y1 slots among the configured candidate positions.

### 1-(4)-2 Change triggering of time offset application and SS set configuration

The BS may configure and/or instruct the UE to apply a time offset and change the positions of Y1 and Y2 slots through a separate RRC configuration, MAC-CE activation, or DCI indication. Alternatively, the UE may operate in an event-triggered manner. Specifically, the UE may detect and report to the BS (gNB) that the index of the best SSB changes based on the strength of a received signal. Alternatively, when the UE reports the best SSB and the second best SSB to the BS, reporting that the index of the best SSB changes under specific conditions (e.g., when the difference between the two report values is greater than or equal to a specific threshold) may be considered as an event. Alternatively, the beam failure recovery process may be considered as an event. For example, the occurrence of an event may be determined to be after a specific time (e.g., X symbols) from a point in time at which the UE finds a new beam after beam failure and transmits a PUCCH (or PRACH) corresponding to the new beam.

In the above cases, the UE may operate by determining the presence or absence of a time offset and/or the value of the time offset without separate signaling. Alternatively, the UE may receive the presence or absence of the time offset and/or the value of the time offset from the BS through a separate RRC configuration, MAC-CE, or DCI indication.

When the positions of the Y1 and/or Y2 slots change due to the time offset, a part of the SS set configuration changes. Alternatively, there may be restrictions on the SS set configuration to apply the time offset. For example, when the positions of the Y1 and/or Y2 slots in the slot group change through the MAC-CE, the parameters of the SS set configuration such as periodicity, offset, and duration need to be interpreted to align with the changed positions of the Y1 and/or Y2 slots. Alternatively, the parameters such as periodicity, offset, and duration may be set to limited values by considering the positions of the Y1 and/or Y2 slots before change and the positions of the Y1 and/or Y2 slots to be changed. As another method, if the time offset occurs after the parameters are defined based on when the time offset value is 0, the BS may add the time offset to some of the configured/indicated parameter values. Alternatively, the UE may add the time offset to some of the configured/indicated parameter values. That is, the SS set configuration parameters may be a function of the time offset. For example, if the positions of the Y1 and/or Y2 slots within X slots are shifted two slots back, the periodicity remains unchanged, but the offset may be adjusted by additional two slots. As another method, a plurality of sets of SS set configuration parameters may be configured, and the link relationship between each parameter set and the time offset value may be predetermined. This allows for the use of an appropriate SS set configuration parameter set based on the extent of the time offset. Alternatively, after multiple parameter sets are configured, a specific set may be configured/indicated through an explicit method such as DCI. The restriction and reinterpretation of the SS set configuration and the link relationship between the SS set configuration and the time offset value may be applied equally or differently to Y1 and Y2. If the restriction and reinterpretation are applied uniformly, one of Y1 and Y2 may server as the reference.

When the TCI state corresponding to a CORESET is changed by the MAC-CE, the positions of the Y1 and/or Y2 slots and SS set configuration parameter values may be changed according to the changed TCI state. In this case, the time offset value of the Y1 and/or Y2 slots corresponding to each TCI state may be preconfigured, and the time offset may be applied according to the TCI state changed by the MAC-CE. The SS set configuration parameters need to be changed. Similar to the method described above, the association between a specific parameter and the time offset may be predefined. Alternatively, multiple SS set configuration sets may be predefined, and a link relationship between the SS set configuration parameter sets and TCI states may be created. The SS set configuration related parameter sets may be applied for each changed TCI state. The change in the SS set configuration according to the TCI state and the link relationship between the TCI state and the time offset value may be applied equally or differently to Y1 and Y2. If the change in the SS set configuration according to the TCI state and the link relationship between the TCI state and the time offset value are applied uniformly, one of Y1 and Y2 may server as the reference.

Additionally, to improve the efficiency of the operation of changing slot #n_0 linked to the index of the best SSB, the UE may report change of n_0 to the BS. That is, if slot #n_0 changes, the UE may transmit a (aperiodic) L1 report to the BS (i.e., event triggered L1 report). As another method, the UE may periodically report information on slot #n_0 linked to the index of the current best SSB to the BS. In this case, the operation of changing the positions of the Y1 and/or Y2 slots due to the change of n_0 after a specific time from when the UE transmits a periodic report may be executed simultaneously by both the BS and UE. The specific time may be determined based on t1, D1, D2, t2, t2_1, and/or t2_2 described above. The L1 report may include the index of slot #n_0, the offset from the first slot of the corresponding slot group to n_0, the difference between the index of slot #n_0 before the change and slot #n_0 after the change, or the index of a slot preferred by the UE (as the starting point of the monitoring window). Alternatively, the L1 report may include the index of the first slot among the Y1 slots in the slot group, the offset from the first slot of the corresponding slot group to the first slot among the Y1 slots, the difference between the first slot among the Y1 slots before the change and the first slot among the Y slots after the change, or the index of the first slot among the Y1 slots preferred by the UE.

**1-(4)-3 Triggering point in time, application point in time, and application delay of time offset**

To change the positions of Y1 and/or Y2 slots in a slot group based on a time offset, a triggering reference point in time (=t1), a time offset application point in time (=t2), and an application delay (= D) required between t1 and t2 need be determined. Based on these values, the BS and UE may accurately determine the point in time at which the positions of the Y slots change. In the methods described below, the parameters related to t1 , t2, D and the application point in time from triggering of the time offset may be determined based on one of Y1 and Y2 and then applied uniformly to Y1 and Y2. Depending on scenarios, Y1 and Y2 may be set differently. In the methods described below, unless otherwise specified, t1, t2, D, etc. will be represented by a single identical value without distinguishing between Y1 and Y2.

First, the triggering reference point in time (=t1) may be determined according to one of the following methods, depending on the triggering entity (BS/UE) and the triggering method.

- The point in time at which an RRC (re)configuration is indicated (i.e., a slot (or symbol) in which the UE receives a data/control channel including the RRC (re)configuration that triggers the application of the time offset or the starting/ending boundary of a slot group (or subframe) including the slot).
- The point in time at which the MAC-CE is activated and/or indicated (i.e., a slot (or symbol) at which the UE receives the MAC-CE activation/indication that triggers the time offset application or the slot starting/ending boundary of a slot group (or subframe) including the slot). Alternatively, the triggering point in time may be determined to be a specific time (e.g., 3 msec) or a specific number of symbols and/or slots from the point in time at which the MAC-CE activation and/or instruction is received. In this case, the specific time and specific number may be predefined according to the SCS for multi-slot monitoring.
- The triggering point in time may be determined to be after the point in time at which the DCI indication is provided (i.e., a slot or symbol at which the UE receives a separate DCI indication that triggers the time offset application or the starting/ending boundary of a slot group (or subframe) including the slot). Alternatively, after a specific time (e.g., the specific time may be a certain number of slots, a certain number of slot groups, or a certain time (msec)) from the point in time of receiving the DCI, the UE may be configured to apply the time offset to change the positions of the Y slots in the slot group. In this case, the specific time may be predefined according to the SCS for multi-slot monitoring.
- When the time offset is triggered by the UE through the L1 report or L3 report, the reporting point in time may be determined as the triggering reference point in time. Alternatively, the starting or ending boundary of a slot, slot group, or subframe including the corresponding reporting point in time (or a slot, slot group, or subframe corresponding to the reporting point in time) may be determined as the reference point in time.

The application delay (=D) refers to the (minimum) delay required from the triggering (t1) until the UE applies the time offset to change the positions of the Y1 and/or Y2 slots in the slot group. The delay D may be defined as the number of slots after t1. The delay D may be defined as the number of slot groups after t1 due to the characteristics of multi-slot monitoring (for example, the delay D may be predetermined as either the length of a slot group X or a multiple of X). Alternatively, similar to the application delay linked with other conventional MAC-CEs, the delay D may be set to an absolute time (msec). The delay D may be predefined according to the SCS of the monitored PDCCH or X dur, Y1_dur, and/or Y2_dur of multi-slot monitoring. Depending on the triggering entity/method, different application delays may be predefined.

The point in time (=t2) at which the time offset is applied may be determined as a specific time after the application delay from the triggering point in time (t1). The application of the time offset may mean that the positions of the Y1 and/or Y2 slots within the slot group change. Specifically, t2 may be determined as the boundary of the earliest slot group (or subframe) in the time domain after the minimum delay D. Alternatively, t2 may be determined as the first MO of a Type 0 PDCCH linked to an SSB index after the boundary of the earliest slot group (or subframe) in the time domain after D (which causes the time offset). For example, when a slot #(n_0) change event is triggered (by the UE itself or by the configuration/indication of the gNB), after the delay D from the triggering point in time (a slot group corresponding to the triggering point in time or the starting/ending boundary of the next slot group), new Y1 and/or Y2 slots are located from the earliest slot group boundary in the time domain (i.e., {Z#(m)}), and PDCCH monitoring may be performed in the new Y1 and/or Y2 slots.

After t2 at which the time offset is applied and the positions of the Y1 and/or Y2 slots in the slot group change to {Z1#(m)} and/or {Z2#(m)}, PDCCH monitoring can be performed only for {Z1#(m)} and/or {Z2#(m)}. However, after the triggering point in time, it is necessary to determine a location where PDCCH monitoring needs to be performed before t2. As one natural method, an operation in which the UE performs PDCCH monitoring at the positions of the Y1 and/or Y2 slots (i.e., {Y1#(m)} and/or {Y2#(m)}) from t1 to t2 may be considered. In particular, for SS sets such as a UE-specific SS, it may be considered that the conventional operation is performed before the application point in time (t2), but the PDCCH is monitored at the changed positions of the Y1 and/or Y2 slots after the point in time at which the positions of the Y1 and/or Y2 slots are expected to be changed, thereby avoiding incorrect control information. For some CSS set types (and more particularly, for Type 0 PDCCH monitoring), monitoring needs to be performed at the changed positions of the Y2 slots immediately after the triggering point in time. To this end, the UE may monitor a group including a specific type of SS set (e.g., a group including no Type 0 CSS set) at the current positions of the Y1 slots (i.e., {Y1#(m)}) from t1 to time t2. The UE may monitor a group including another specific type of SS set (e.g., a group including a Type 0 CSS set) at the changed positions of the Y2 slots (i.e., {Z2#(m)}). Depending on the position of slot #(n_0) corresponding to the changed SSB index, {Y1#(m)} and {Z2#(m)} may completely overlap, partially overlap, or may not overlap. For the SS set group including the Type 0 CSS set, the UE may monitor the PDCCH at changed {Z2#(m)}. For other SS set groups (represented as a group 1 SS), the UE may operate as follows depending on whether there is an overlap.

- If Union ({Z2#(m)}, {Y1#(m)}) == {Y1#(m)}, the group 1 SS is monitored in {Y1#(m)} in the same way as before applying the time offset..
- If Union ({Z2#(m)}, {Y1#(m)}) != {Y1#(m)}, the group (1) SS is monitored in some slots including Intersection ({Z2#(m)}, {Y1#(m)}) among {Y#(m)}, and monitoring is dropped in other slots. In this case, the maximum number of slots on which monitoring is performed without being dropped may be X/2 (or configured Y1_dur).
- If Intersection ({Z2#(m)}, {Y1#(m)}) == 0, the group (1) SS is not monitored in the corresponding time duration. Alternatively, if changed slot #(n_0) is behind {Y1#(m)} (in the time domain), monitoring is dropped in some front slots of {Y1#(m)}, and monitoring is performed in the remaining slots of {Y1#(m)}. If changed slot #(n_0) precedes {Y1#(m)} (in the time domain), monitoring is dropped in some rear slots of {Y1#{m)}, and monitoring is performed in the remaining slots of {Y#(m)}.

If t2 (t2_1) of the Y1 slots and t2 (t2_2) of the Y2 slots are configured differently, both the Y1 slots and Y2 may be changed at a point in time after max(t2_1,t2_2), and then monitoring may be performed in {Z1#(m)} and {Z2#(m)}. However, it may be necessary to determine rules for monitoring on the Y1 and Y2 slots at a point in time from after t2_1 until before t2_2 (or from after t2_2 until before t2_1). The monitoring method between t1 and t2 described above may be similarly applied in this case. For convenience of explanation, it is assumed that t2_2 precedes t2_1. As the simplest method, from after t2_2 until before t2_1, the Y2 slots may be monitored at changed {Z2#(m)}, and the Y1 slots may be monitored in {Y1#(m)} before the change.

Depending on the position of slot #(n_0) corresponding to the changed SSB index, {Y1#(m)} and {Z2#(m)} may completely overlap, partially overlap, or may not overlap. For the SS set group including the Type 0 CSS set, the UE may perform monitoring in {Z2#(m)}. For other SS set groups (represented as a group (1) SS), the UE may operate as follows depending on whether there is an overlap.

- If Union ({Z2#(m)}, {Y1#(m)}) == {Y1#{m)}, the group (1) SS is monitored in {Y1#(m)} in the same way as before applying the time offset..
- If Union ({Z2#(m)}, {Y1#(m)}) != {Y1#(m)}, the group (1) SS is monitored in some slots including Intersection ({Z2#(m)}, {Y1#(m)}) among {Y1#{m)}, and monitoring is dropped in other slots. In this case, the maximum number of slots on which monitoring is performed without being dropped may be X/2 (or configured Y1_dur).
- If Intersection ({Z2#(m)}, {Y1#(m)}) == 0, the group (1) SS is not monitored in the corresponding time duration. Alternatively, if changed slot #(n_0) is behind {Y1#(m)} (in the time domain), monitoring is dropped in some front slots of {Y1#{m)}, and monitoring is performed in the remaining slots of {Y1#(m)}. If changed slot #(n_0) precedes {Y1#(m)} (in the time domain), monitoring is dropped in some rear slots of {Y1#(m)}, and monitoring is performed in the remaining slots of {Y#(m)}.

To align the MOs of the Y1 and Y2 slots, PDCCCH monitoring is performed at {Y1#(m)} and {Y2#(m)} for each SS group in the corresponding duration (i.e., between t2_1 and t2_2). After t2_2, PDCCH monitoring may be performed in {Z1#(m)} and {Z2#(m)}.

Additionally, t2 may vary depending on whether the relative position of Z2#(0) in the slot group precedes or follows the relative position of Y1#(0). For example, when the index of the slot group (or subframe) corresponding to t1 is #n,

- If the relative position of Z2#(0) precedes the relative position of Y1#(0), the boundary of the earliest slot group (or subframe) after D from the boundary of slot group (or subframe) #(n) may be t2.
- If the relative position of Z2#(0) follows the relative position of Y1#(0), the boundary of the earliest slot group after D from the boundary of slot group (or subframe) #(n+1) may be t2.

Accordingly, it is possible to avoid an increase in the monitoring burden of the UE in a specific slot group due to the positions of the Y1 and/or Y2 slots before/after change.

Additionally, in a mixed SCS scenario, it may be necessary to select which SCS the triggering reference point in time (t1), application delay (D), and application point in time (t2) needs to be determined based on. For example, for multi-cell operations such as CA, a situation where each cell has a different numerology (i.e., SCS) may be considered. In this case, the above-described method of determining t1, D, and t2 may be applied based on the lowest or highest SCS among the configured SCSs of DL cells as needed. In the mixed SCS scenario, if conservative and/or stable operations of the BS and UE are required, each device may operate based on the lowest SCS (in spite of the inefficiency of the system such as the relatively slow application speed of the time offset). If rapid time offset application is required (despite some burdens on the BS/UE), the operation based on the highest SCS may be more suitable. If the SCS of the P cell (or PSCell) is different from that of the S cell, the operation may be based on the SCS of the P cell (or PSCell). The reference SCS may be explicitly configured/indicated through signaling such as separate RRC or DCI.

**1-(4)-4 Multi-cell operation**

The proposed methods described above, although not explicitly indicated, have been explained with reference to a PCell or PSCell. However, for a SCell that are aggregated with the above cells, the position of a PDCCH MO may also be changed based on the application of a time offset. The following methods may be applied.

- In a multi-cell operation scenario, the proposed methods may be independently applied to PCells, PSCells, or SCells. Specifically, the time offset, application delay, etc., may be determined independently.
- In the multi-cell operation scenario, the proposed methods are applied independently to the PCell (or PSCell), while in the SCell aggregated with the PCell (or PSCell), the time offset, application delay, etc., determined for the PCell (or PSCell) may be used. For the link operation, a separate configuration/indication method such as RRC may be used for enabling (i.e., the SCell is linked to the PCell)/disabling (i.e., the SCell is separately configured). In particular, for the time offset, the value independently determined for the PCell (or PSCell) according to the proposed methods described above may be uniformly applied to the SCell. For the application delay, the value independently determined for the PCell (or PSCell) may be uniformly applied to the SCell. Alternatively, a value larger than the one determined for the PCell (or PSCell) (or a point in time following t2) may also be applied to the SCell. Whether to apply the same value may be signaled separately. The time offset, application delay, etc., may be determined for the PSCell (independently of the PCell), and the time offset, application delay, etc. may be used for the SCell. Alternatively, the time offset, application delay, etc., may be independently determined only for the PCell and then used uniformly for both the PSCell and SCell.

- In the multi-cell operation scenario, if multiple SCells are configured for the UE, some or all of the configured SCells may be grouped together. The proposed methods may be uniformly applied to each group. The values determined for the PCell (or PSCell) may be determined as the values of the time offset and/or application delay applied to a specific group of SCells. Alternatively, the values of the time offset and/or application delay applied to a specific group of SCells may be independently determined for specific SCells for each group. Depending on the value determined/applied for the PCell/PSCell or a representative specific SCell of the group, the time offset, application delay, etc. are applied to the SCells within the group. Accordingly, the positions of Y slots within the slot group may change. A specific SCell for determining values such as the time offset for each group may be arbitrarily configured/indicated/determined within the group or predetermined for each group. (For example, after the maximum number of SCells capable of being included in a group is predefined, the SCell with the lowest cell ID for each group may be determined as the representative SCell). Alternatively, if the time offset is triggered in any SCell in the group and the positions of the Y slots in the slot group change, the time offset of all SCells in the group may be triggered, and the positions of the Y slots of all SCells may change. As an embodiment therefor, when SCells #1, #2, #3, and #4 are configured to the UE, SCells #1 to #4 may be grouped into one group, and among SCells #1, #2, #3, and #4, SCell #1 may be the representative SCell. If the time offset of SCell #1 changes, the time offsets of SCell #2, #3, and #4 may also change to the same value and then applied.

Additionally, in a CA scenario, it may be possible to determine and apply the time offset of another specific cell (with multi-slot monitoring) based on the MO in a specific cell (without multi-slot monitoring). For example, when per-slot or per-span monitoring is configured on the PCell (or PSCell) and multi-slot monitoring is configured on the SCell, the positions of the Y slots, which are the monitoring duration of the SCell, may be changed based on the time offset in order to align the MO (or monitoring time duration) of the SCell according to the MO of the PCell/PSCell (or non-monitoring time duration).

## 1-(5) Method of determining positions of Y slots (i.e., PDCCH MO) in X slot groups through search space set group switching (SSSG) switching

SSSG switching is a feature introduced in Rel-16 NR-U. According to this method, a group with specific SS set configuration(s) may be predefined (a different SS set configuration may be configured for each group). Depending on the ID (or index) of an SSSG, the periodicity of the PDCCH monitoring operation of the UE may vary. In Rel-16, SSSG switching may be applied in a Type 3 CSS set and a USS. In the multi-slot monitoring operation, the position of Y (or the position of Y1) within a slot group may change based on SSSG switching (or the MO of a specific SS type (e.g., type1-CSS set with RRC) within the slot group may change based on SSSG switching).

In other words, a different SS set configuration is configured for each SSSG. Then, if the position of Y (or Y1) slots within the slot group needs to change due to a change in the best SSB, switching may be performed to an SSSG for determining the most appropriate positions of the Y (or Y1) slots. In this case, parameters such as a periodicity, offset, duration, etc. may vary for each SSSG. For example, an offset of M1 is configured for SSSG#0, and an offset of M2 is configured for SSSG#1, and then switching to the most appropriate SSSG may be performed depending on to the best SSB index. The number of configurable SSSG may be limited to 2 as in Rel-16, or 3 or more SSSGs may be configured as needed.

Each SSSG may optionally include groups for each SS set type described above (e.g., group (1) SS and/or group (2) SS described above). Alternatively, the group (1) SS may be included in all SSSGs, but different SS set configurations may be configured. Unlike conventional rel-16 NR-U, a Type 1 CSS set (more specifically, a Type 1 CSS with dedicated RRC configurations) may be included in the SSSG. In other words, the Type 1 CSS set may be included in all SSSGs allowed for switching.

As an embodiment therefor, the Type 1 CSS set (with RRC configurations) may be configured in both SSSG#0 and SSSG#1, and the offsets of SSSG#0 and SSSG#1 may be configured differently. The monitoring position of the Type 1 CSS set within the slot group may change based on SSSG switching.

As another embodiment therefor, SSSG#0 and SSSG#1 may be set to the group (1) SS (i.e., SS set groups with the Type 1 CSS with dedicated RRC configurations), and different offsets may be configured in SSSG#0 and SSSG#1. The monitoring position of the corresponding SS set within the slot group may change.

## 1-(6) Method of changing number of PDCCH monitoring slots based on BD/CCE limit for Type 0 CSS set (or Type 0/0A/2 CSS set)

Table 8 shows the BD/CCE limit for Type 0/0A/2 CSS sets defined in 3GPP TS 38.213.

[Table 8]

For a DL BWP, if a UE is not provided searchSpaceSIB 1 for Type0-PDCCH CSS set by PDCCH-ConfigCommon, the UE does not monitor PDCCH candidates for a Type0-PDCCH CSS set on the DL BWP. The Type0-PDCCH CSS set is defined by the CCE aggregation levels and the number of PDCCH candidates per CCE aggregation level given in Table 10.1-1. If the active DL BWP and the initial DL BWP have same SCS and same CP length and the active DL BWP includes all RBs of the CORESET with index 0, or the active DL BWP is the initial DL BWP, the CORESET configured for Type0-PDCCH CSS set has CORESET index 0 and the Type0-PDCCH CSS set has search space set index 0.

For a DL BWP, if a UE is not provided searchSpaceOtherSystemInformation for TypeOA-PDCCH CSS set, the UE does not monitor PDCCH for TypeOA-PDCCH CSS set on the DL BWP. The CCE aggregation levels and the number of PDCCH candidates per CCE aggregation level for TypeOA-PDCCH CSS set are given in Table 10.1-1.

For a DL BWP, if a UE is not provided ra-SearchSpace for Type1-PDCCH CSS set, the UE does not monitor PDCCH for Type1-PDCCH CSS set on the DL BWP. If the UE has not been provided a Type3-PDCCH CSS set or a USS set and the UE has received a C-RNTI and has been provided a Type1-PDCCH CSS set, the UE monitors PDCCH candidates for DCI format 0_0 and DCI format 1_0 with CRC scrambled by the C-RNTI in the Type1-PDCCH CSS set.

If a UE is not provided pagingSearchSpace for Type2-PDCCH CSS set, the UE does not monitor PDCCH for Type2-PDCCH CSS set on the DL BWP. The CCE aggregation levels and the number of PDCCH candidates per CCE aggregation level for Type2-PDCCH CSS set are given in Table 10.1-1.

[Table 9]

| CCE Aggregation Level | Number of Candidates |
|---|---|
| 4 | 4 |
| 8 | 2 |
| 16 | 1 |

Table 9 shows Table 10.1-1: CCE aggregation levels and maximum number of PDCCH candidates per CCE aggregation level for CSS sets configured by searchSpaceSIB1, which is defined in 3GPP TS 38.213.

In the multi-slot PDCCH monitoring operation for checking a BD/CCE budget on a slot group basis, a BD/CCE budget including all Type 0/0A/2-CSS sets, Type 1 CSS set, and UE-specific SS sets is checked on a slot group basis. For example, for multi-slot monitoring for am SCS of 480/960 kHz, the BD/CCE limit for a serving cell (or for the BWP of the cell) in a slot group consisting of 4 or 8 slots may be determined as 20/32 (as in the BD/CCE limit on a slot basis for an SCS of 120kHz). When Type 0 PDCCH monitoring is performed in two consecutive slots (e.g., slot #(n0) and slot #(n0+1)) within one slot group, if the BD/CCE limit for the CSS set defined in Table 10.1-1 in 3GPP TS 38.213 is applied to the two slots (i.e., slot #(n0) and slot #(n0+1)), there may be an issue of exceeding the total BD/CCE limit of the corresponding slot group. To avoid such issues, even if the total BD/CCE limit in the corresponding slot group is configured not to exceed by adjusting the configuration for the CSS set monitored in the two slots, the BD/CCE limit for other types of SS sets (i.e., the maximum number $M_{\mathrm{PDCCH}}^{max,slot,\mu}$ of monitored PDCCH candidates and the maximum number $C_{\mathrm{PDCCH}}^{max,slot,\mu}$ of non-overlapped CCEs) may be significantly restricted in the corresponding slot group. To address this issue, the following is proposed.

(Method 6-1)

When the BD/CCE limit configured for two slots in one slot group, that is, slot #(n0) and slot #(n0+1), is greater than (or equal to) the BD/CCE limit defined per slot group, the UE may monitor a Type 0 PDCCH only in slot #(n0). Otherwise, the UE may monitor the Type 0 PDCCH in both slot #(n0) and slot #(n0+1). In this case, the 'BD/CCE limit configured for slot #(n0) and slot #(n0+1)' refers to the total of BD/CCE limits configured in two slots, that is, slot #(n0) and slot #(n0+1). If the BD/CCE limit configured for the two slots is greater than or equal to the BD/CCE limit defined per slot group, it may mean either the BD limit or the CCE limit for the two slots is greater than or equal to either the BD limit or the CCE limit per slot group. Alternatively, it may mean that both the BD limit and the CCE limit for the two slots are greater than or equal to the limit defined for each slot group.

(Method 6-2)

When the BD/CCE limit configured for two slots, i.e., slot #(n0) and slot #(n0+1) in one slot group is greater than (or equal to) the BD/CCE limit defined per slot group, the UE may monitor a Type 0 PDCCH only in slot #(n0). Otherwise, the UE may monitor the Type 0 PDCCH in both slot #(n0) and slot #(n0+1). In this case, the 'BD/CCE limit configured in slot #(n0) and slot #(n0+1)' refers to the total of BD/CCE limits configured in two slots, that is, slot #(n0) and slot #(n0+1). If the BD/CCE limit configured for the two slots is greater than or equal to the BD/CCE limit defined per slot group, it may mean either the BD limit or the CCE limit for the two slots is greater than or equal to either the BD limit or the CCE limit per slot group. Alternatively, it may mean that both the BD limit and the CCE limit for the two slots are greater than or equal to the limit defined for each slot group. In slot #(n0+X), X may mean the length of the slot group. For example, if the BD/CCE limit configured in slot #(n0) and slot #(n0+1) is greater than or equal to the BD/CCE limit defined per slot group, the UE monitors the Type 0 PDCCH in slot #(n0) in a specific slot group and slot #(n0+X) in a next slot group. In this case, the interval between slot #(n0) and slot #(n0+X) is X slots, and this value is equal to the length of the slot group.

### 1-(7) Definition of BD/CCE limit of Type 0/0A/2-CSS set on slot group basis

For a high SCS (e.g., 480/960 kHz SCS), a separate BD/CCE limit for Type 0/0A/2-CSS sets may be defined as the limit per slot group. That is, Table 10.1-1 shown in 1-(6) above may be modified into Table 10.1-1x: CCE aggregation levels and maximum number of PDCCH candidates per CCE aggregation level for CSS sets configured by searchSpaceSIB1 per a slot group of X slots.

When the BD/CCE limit per slot group is defined for the CSS sets as described above, the value may be used as it is regardless of the slot group length. Alternatively, when X=4/8 for 480/960 kHz, respectively, the value may be used. For other values of X, different values may be used in proportion to the X value, compared to the values in the table above. For example, Table 10.1-x above may be defined regardless of the slot group length (=X). Alternatively, for an SCS of 480 kHz, the table above may be defined for X=4/8 for 480/960 kHz SCS. When X=2/4, the half of the values in the table above (or scaled values for X=4/8) may be used. If the half (or scaled) value is not an integer, a value obtained by rounding up (floor) or rounding down (ceil) the corresponding value may be used.

The proposed method and Table 10.1-1x are not limited to the above format. For example, while the definition of the 'CCE aggregation level' and 'number of candidates' per slot group may be maintained, specific values may be different from those mentioned above. Alternatively, it may be possible to configure/indicate the 'CCE aggregation level' and/or 'number of candidates' per slot group for the UE through higher layer signaling such as RRC, depending on the value of X.

### 1-(8) Method of selecting MO for monitoring specific SS set among multiple MOs configured in one slot group

The BS may configure a time-domain duration for the UE to monitor a PDCCH through SS set configuration parameters. Considering the power consumption and complexity of the UE in the monitoring duration (i.e., monitoring symbols) (in the case of multi-slot monitoring, monitoring slots within a slot group) (hereinafter, the monitoring duration is referred to as an MO), it may be necessary for the UE to monitor only a certain number of MOs during the duration of a single slot group (for at least specific SS set types). To this end, the BS may configure only one MO per SS set type (or per group consisting of specific SS set types). Alternatively, the BS may configure multiple MOs for the duration of a single slot group, and the UE may select only one specific MO (or a specific number of MOs) among the configured MOs to monitor a PDCCH and may not monitor the others. In particular, for example, SS set types corresponding to the group 2 SS may not be limited to specific UEs. Thus, the BS may configure multiple MOs within a slot group, and the UE may select and monitor only some (e.g., one) of the multiple MOs (in other words, it may not be required for the UE to monitor the remaining MOs except for some (e.g., one) of the configured MOs).

In the present disclosure, for SS set types corresponding to the group (2) SS, when multiple MOs are configured during the duration of a slot group, a method for the UE to selectively monitor specific MO(s) only is proposed. In this case, the group (2) SS may include a Type 1 PDCCH CSS set without dedicated RRC configurations (Type 1 PDCCH CSS set provided in SIB1), a Type 0 PDCCH CSS set, a Type 0A PDCCH CSS set, and/or a Type 2 PDCCH CSS set as described above. The group (1) SS may include a Type 1 PDCCH CSS set with dedicated RRC configurations (Type 1 PDCCH CSS set provided by dedicated higher layer signaling), a Type 3 PDCCH CSS set, and/or a UE-specific SS set. For multi-slot monitoring, MOs corresponding to the group (1) SS may be limited within some Y slots within the slot group, while MOs corresponding to the group (2) SS may be positioned across all slots within the slot group.

(Method 8-1)

When the UE is in the connected mode, the UE may be configured with the positions of Y slots for a group (1) SS through RRC configurations (e.g., periodicity) related to SS set configurations. In this case, when multiple MOs are configured for the SS set type corresponding to the group (2) SS, the UE may select one (or some) MO from the configured MOs based on the positions of the Y slots and perform monitoring thereon. As an embodiment therefor, when there are one or more MOs overlapping with the Y slots among the configured multiple MOs, if the UE intends to select one MO, the UE may select the most preceding MO among the overlapping MOs. As another embodiment therefor, when there are no MOs overlapping with the Y slots among the configured multiple MOs, if the UE intends to select one MO, the UE may select the MO closest to the Y slots among the configured MOs. The criterion for adjacent MOs is the closest MO among MOs preceding the Y slots, the closest among MOs following the Y slots. Alternatively, the criterion is the closest MO among all MOs configured in a slot group, regardless of whether the MO follows or precedes the Y slots. As another embodiment therefor, when there are no MOs overlapping with the Y slots among the configured multiple MOs, if the UE intends to select one MO, the UE may select the MO that is the earliest among the configured MOs and starts from the starting point of the slot group. As another embodiment therefor, when the UE monitors a PDCCH by selecting k (k>1) or more MOs from the configured MOs, the UE may perform monitoring on k consecutive MOs starting from the MO selected according to the method described above. If the UE selects the closest MO among the MOs following the Y slots, the UE may also select k consecutive MOs (in reverse chronological order). Alternatively, if the UE selects the closest MO regardless of whether the MO follows or precedes the Y slots, the UE may select k consecutive MOs starting from the MO closest to the Y slots (regardless of chronological order). In this case, k may be predefined for each SCS or configured through higher layer signaling such as RRC or through separate control channels or signals such as DCI. Alternatively, how many MOs the UE needs to monitor (i.e., k) may also be supported as a part of the UE capability.

In particular, when Method 8-1 described above is applied to Type 1 CSS sets, if the connected mode UE uses a contention-free RACH, the method may be applied.

(Method 8-2)

When the UE is in the idle/inactive mode, the positions of Y slots for a group (1) SS may not be determined. In this case, if multiple MOs are configured for SS set type corresponding to the group (2) SS, the UE may use a specific slot (=ref-slot) as a reference point and then select one (or some) MOs from the configured MOs for monitoring. As an embodiment therefor, if the UE intends to select one MO from the configured multiple MOs, the UE may select the MO that is the earliest among the configured MOs and starts from the starting point of a slot group. As another embodiment therefor, the UE may determine the reference slot based on the number of slots forming the slot group, denoted as X, an RA-RNTI, and a preamble index and then select the MO closest to the reference slot. In this case, X may be 4 for an SCS of 480 kHz SCS or 8 for an SCS of 960 kHz. The criterion for adjacent MOs may be selected from MOs preceding (or following) the reference slot or be from all of the configured MOs as described in Method 8-1. As an embodiment therefor, if the UE intends to select one MO from the configured multiple MOs after determining the reference slot based on RA-RNTI mod X or preamble index mod X, the UE may select the MO closest to the reference slot for monitoring (where A mod B denotes the modulo operation). In the above embodiment, if the UE performs monitoring by selecting k (k>1) or more MOs from the configured MOs, monitoring may be performed on k consecutive MOs starting from the MO selected according to the method described above, where k may be predefined for each SCS or configured through separate control channels or signals. Alternatively, how many MOs the UE needs to monitor (i.e., k) may also be supported as a part of the UE capability.

When Method 8-2 described above is applied to Type 1 CSS sets, if the idle/inactive mode UE or connected mode UE uses a contention-based RACH, the method may be applied.

Method 8-1 and Method 8-2 described above are proposed for different UE states, and both methods may be applied, or only one method may be applied. The methods may also be applicable to a specific SCS only. Additionally, the UE may receive configurations regarding whether to perform the operation of selecting one (or some) MOs from configured multiple MOs for monitoring, which has been described in Method 8-1, through separate signaling such as RRC (or DCI).

The present disclosure is not limited to transmission and reception of UL and/or DL signals. For example, the present disclosure may also be used for direct communication between UEs. In addition, the term "BS" in the present disclosure may include a relay node as well as a BS. For example, the operations of the BS described in this document may be performed by the BS, but the operations may also be performed by the relay node.

It is obvious that each of the examples of the proposed methods may also be included as one implementation method of the present disclosure, and thus each example may be regarded as a kind of proposed method. Although the above-described proposed methods may be implemented independently, some of the proposed methods may be combined (or merged) and implemented. In addition, it may be regulated that information on whether the proposed methods are applied (or information on rules related to the proposed methods) is transmitted from the BS to the UE or from the transmitting UE to the receiving UE in a predefined signal (e.g., physical layer signaling or higher layer signaling).

Implementation Examples

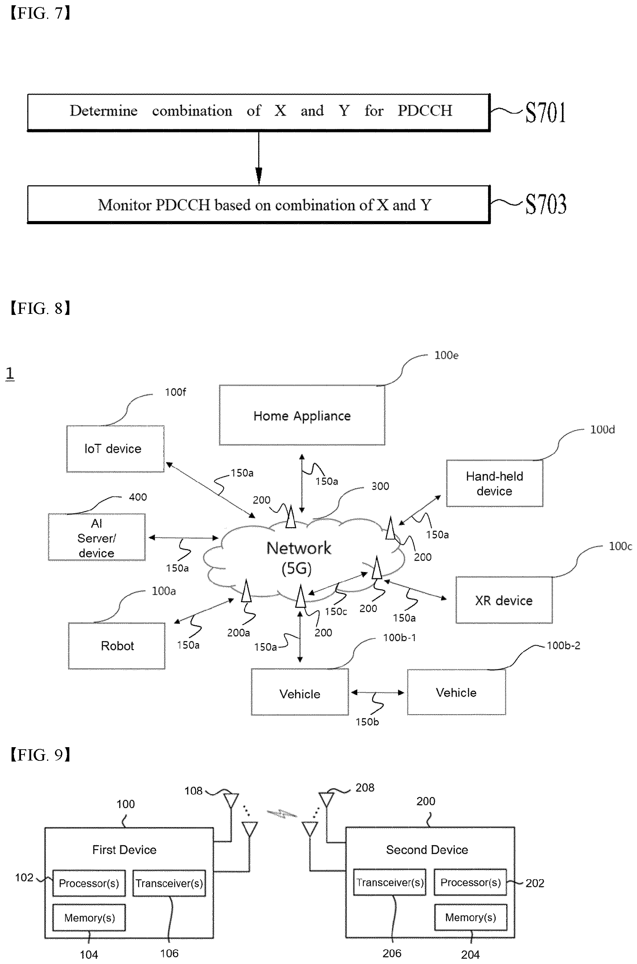

FIG. 7 is a flowchart of a signal monitoring method according to embodiments of the present disclosure.

Referring to FIG. 7, the embodiment performed by the UE may include: determining a combination of X and Y for monitoring a PDCCH (S701); and monitoring the PDCCH based on the combination of X and Y. (S703).

The PDCCH monitoring may be performed based on one or more of the operations described in Section 1.

For example, referring to Section 1-(1), X slots and Y slots may be configured as described in Alt-1b and FIG. 5(c). Assuming that a group of X slots is a first slot group (i.e., the slot group in Section 1) and a group of Y slots is a second slot group, X is the number of consecutive slots included in the first slot group. Referring to FIG. 5, a plurality of first slot groups are continuously repeated without overlapping. According to Alt-1b and FIG. 5(c), the second slot group may consist of consecutive slots to which wrap-around is applied in the time domain, starting from a specific slot of the first slot group. For convenience, FIG. 5 shows the slot indices of the second slot group are represented as 7, 8, 9, and 10. However, since a slot with index 8 is the foremost slot in the second first slot group, the slot corresponds to a slot with index 0 relative to a second first slot group. Indices 9 to 15 may also be represented as indices 1 to 7.

Therefore, if the second slot group consists of consecutive slots within the first slot group where wrap-around is applied, the second slot group needs to include (i) a slot with the lowest index and (ii) a slot with the highest index among the slots in the first slot group. In addition, the second slot group may include (iii) one or more slots with consecutive indices for the lowest index and/or (iv) one or more slots with consecutive indices for the highest index among the slots in the first slot group.

When the second slot group consists of consecutive slots within the first slot group where wrap-around is applied, if the PDCCH is monitored for a Type 0 PDCCH CSS set based on SSB/CORESET multiplexing pattern 1, it may be useful in resolving ambiguity in the case where slot #n_0 corresponding to the index of a specific SSB is located in the last slot of the first slot group.

As an additional example, referring to Section 1-(3), the PDCCH may be monitored for the Type 0 PDCCH CSS set. If the index of slot #n_0 linked to the index of the best SSB changes due to the movement of the UE, a time offset may be applied to the position of the second slot group. Specific time offset application methods may be referenced in the subsections of Section 1-(3).

In summary, in FIG. 7, the PDCCH may be monitored for the Type 0 PDCCH CSS set. The time offset may be applied to the position of the second slot group based on changes in the SSB index associated with the Type 0 PDCCH CSS set.

Referring to Section 1-(4), the Y slots may be divided into Y slots for a first SS group (group (1) SS in Section 1) and Y slots for a second SS group (group (2) SS in Section 1). In FIG. 7, if the PDCCH is monitored for the Type 0 PDCCH CSS set, since the Type 0 PDCCH CSS set belongs to the second SS group, the second slot group may be used to monitor the PDCCH (second PDCCH) for an SS set belonging to the first SS group. In addition, Y2 slots included in a third slot group, which is different from the second slot group, may be used for monitoring a PDCCH for the Type 0 PDCCH CSS set. If the index of slot #n_0 linked to the best SSB changes due to the movement of the UE, the time offset may be applied to the positions of the second slot group and the third slot group. Specific time offset application methods may be referenced in the subsections of Section 1-(4).

In summary, in FIG. 7, the PDCCH may be monitored for the Type 0 PDCCH CSS set belonging to the second SS group. The second slot group is a slot group used for monitoring the second PDCCH for the SS set belonging to the first SS group, and the third slot group for the second SS group consists of Y2 consecutive slots. Based on changes in the SSB index associated with the Type 0 PDCCH CSS set, the time offset may be applied to the positions of the second slot group and the third slot group.

Referring to Section 1-(2), in FIG. 7, the PDCCH may be monitored for the Type 0 PDCCH CSS set belonging to the second SS group. When the SSB index associated with the Type 0 PDCCH CSS set changes, the MO for PDCCH monitoring also changes. Referring to Proposal 1-(2)-3, no MOs are configured in the last slot of the slot group. In other words, no MOs are configured in the last slot of the first slot group.

Referring to Section 1-(8), the first SS group may be monitored in the Y slots, while the second SS group may be monitored in the X slots.

Referring to Method 8-1, when the UE is in the connected mode (when the UE is in the RRC connected state), the position of the second slot group for the first SS group may already be determined. The PDCCH for the SS set belonging to the second SS group is monitored within the first slot group, but the PDCCH monitoring may be performed based on the position of the second slot group.

For example, referring to Method 8-1, if there are MOs overlapping with the second slot group among MOs of the PDCCH, the PDCCH may be monitored on the foremost MO among the overlapping MOs.

As another example, referring to Method 8-1, if there are no MOs overlapping with the second slot group among MOs of the PDCCH, the PDCCH may be monitored on the MO closest to the second slot group among the MOs.

As another example, according to Method 8-1, if there are no MOs overlapping with the second slot group among the MOs of the PDCCH, the PDCCH may be monitored on the foremost MO within the first slot group among the MOs.

Referring to Method 8-2, when the UE transitions into the idle/inactive mode (the RRC idle/inactive state), the position of the second slot group for the first SS group may not be determined. Since the position of the second slot group is not determined, the PDCCH for the SS set belonging to the second SS group may be monitored based on a specific slot, unlike Method 8-1.

For example, referring to Method 8-2, the PDCCH may be monitored on the foremost MO within the first slot group among the MOs of the PDCCH.

As another example, referring to Method 8-2, the PDCCH may be monitored from the MO closest to a reference slot. The reference slot may be determined based on the number of slots in the first slot group (X), the index of a preamble transmitted by the UE, or an RA-RNTI received by the UE based on the preamble.

In addition to the operations described with reference to FIG. 7, a combination of one or more of the operations described with reference to FIGS. 1 to 6 and/or the operations described in Section 1 may be additionally performed.

Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

FIG. 8 illustrates a communication system 1 applied to the present disclosure.

Referring to FIG. 8, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f; and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100f/BS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

<u>Example of wireless device to which the present disclosure is applied</u>

FIG. 9 illustrates wireless devices applicable to the present disclosure.

Referring to FIG. 9, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 8.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

<u>Example of use of wireless device to which the present disclosure is applied</u>

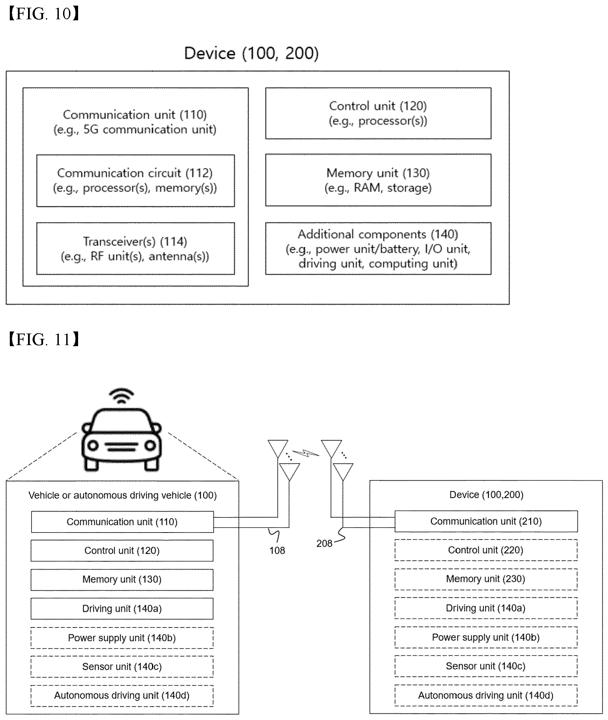

FIG. 10 illustrates another example of a wireless device applied to the present disclosure. The wireless device may be implemented in various forms according to a use case/service (refer to FIG. 8).

Referring to FIG. 10, wireless devices 100 and 200 may correspond to the wireless devices 100 and 200 of FIG. 9 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 9. For example, the transceiver(s) 114 may include the one or more transceivers 106 and 206 and/or the one or more antennas 108 and 208 of FIG. 9. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 8), the vehicles (100b-1 and 100b-2 of FIG. 8), the XR device (100c of FIG. 8), the hand-held device (100d of FIG. 8), the home appliance (100e of FIG. 8), the IoT device (100f of FIG. 8), a digital broadcasting terminal, a hologram device, a public safety device, an MTC device, a medical device, a FinTech device (or a finance device), a security device, a climate/environment device, the AI server/device (400 of FIG. 8), the BSs (200 of FIG. 8), a network node, or the like. The wireless device may be mobile or fixed according to a use case/service.

In FIG. 10, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-transitory memory, and/or a combination thereof.

<u>Example of vehicle or autonomous driving vehicle to which the present disclosure is applied</u>

FIG. 11 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 11, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 10, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

**INDUSTRIAL APPLICABILITY**

As described above, the present disclosure is applicable to various wireless communication systems.

**Claims**

1.   A method of monitoring a control signal by a user equipment (UE) in a wireless communication system, the method comprising:

determining a combination of X and Y for monitoring a physical downlink control channel (PDCCH); and
monitoring the PDCCH based on the combination of X and Y,
wherein X is a number of consecutive slots included in a first slot group,
wherein a plurality of first slot groups are repeated continuously without overlapping,
wherein Y is a number of consecutive slots included in a second slot group, and
wherein the second slot group consists of consecutive slots to which wrap-around is applied within the first slot group.

2.   The method of claim 1, wherein the PDCCH is monitored for a Type 0 PDCCH common search space (CSS) set, and wherein based on that a synchronization signal/physical broadcast channel block (SSB) index associated with the Type 0 PDCCH CSS set is changed, a time offset is applied to a position of the second slot group.

3.   The method of claim 1, wherein the second slot group is a slot group for monitoring a second PDCCH for a search space (SS) set belonging to a first SS group,

wherein the PDCCH is monitored for a Type 0 PDCCH common search space (CSS) set belonging to a second SS group,
wherein a third slot group for the second SS group consists of Y2 consecutive slots, and
wherein based on that a synchronization signal/physical broadcast channel block (SSB) index associated with the Type 0 PDCCH CSS set is changed, a time offset is applied to a position of the second slot group and a position of the third slot group.

4.   The method of claim 1, wherein the PDCCH is monitored for a Type 0 PDCCH common search space (CSS) set,

wherein based on that a synchronization signal/physical broadcast channel block (SSB) index associated with the Type 0 PDCCH CSS set is changed, a monitoring occasion (MO) of the PDCCH is changed, and
wherein the MO is not configured in a last slot of the first slot group.

5.   The method of claim 1, wherein based on that the UE is in a radio resource control (RRC) connected state, the PDCCH is monitored on a foremost monitoring occasion (MO) among MOs overlapping with the second slot group.

6.   The method of claim 1, wherein based on that the UE is in a radio resource control (RRC) connected state and that there is no monitoring occasion (MO) overlapping with the second slot group among MOs of the PDCCH, the PDCCH is monitored on a MO closest to the second slot group among the MOs.

7.   The method of claim 1, wherein based on that the UE is in a radio resource control (RRC) connected state and that there is no monitoring occasion (MO) overlapping with the second slot group among MOs of the PDCCH, the PDCCH is monitored on a foremost MO within the first slot group among the MOs.

8.   The method of claim 1, wherein based on the UE is a radio resource control (RRC) idle or inactive state, the PDCCH is monitored on a foremost monitoring occasion (MO) within the first slot group.

9. The method of claim 1, wherein based on the UE is a radio resource control (RRC) idle or inactive state, the PDCCH is monitored on a monitoring occasion (MO) closest to a reference slot, and

wherein the reference slot is determined based on X, an index of a preamble transmitted by the UE, and a random access radio network temporary identifier (RA-RNTI) received by the UE.

10. A user equipment (UE) configured to monitor a signal in a wireless communication system, the UE comprising:

at least one transceiver;
at least one processor; and
at least one memory operably connected to the at least one processor and configured to store instructions that, when executed, cause the at least one processor to perform specific operations comprising:

determining a combination of X and Y for monitoring a physical downlink control channel (PDCCH); and
monitoring the PDCCH based on the combination of X and Y,
wherein X is a number of consecutive slots included in a first slot group,
wherein a plurality of first slot groups are repeated continuously without overlapping,
wherein Y is a number of consecutive slots included in a second slot group, and
wherein the second slot group consists of consecutive slots to which wrap-around is applied within the first slot group.

11. An apparatus for a user equipment (UE), the apparatus comprising:

at least one processor; and
at least one computer memory operably connected to the at least one processor and configured to, when executed, cause the at least one processor to perform operations comprising:

determining a combination of X and Y for monitoring a physical downlink control channel (PDCCH); and
monitoring the PDCCH based on the combination of X and Y,
wherein X is a number of consecutive slots included in a first slot group,
wherein a plurality of first slot groups are repeated continuously without overlapping,
wherein Y is a number of consecutive slots included in a second slot group, and
wherein the second slot group consists of consecutive slots to which wrap-around is applied within the first slot group.

12. A computer-readable non-transitory storage medium comprising at least one computer program configured to cause at least one processor to perform operations comprising:

determining a combination of X and Y for monitoring a physical downlink control channel (PDCCH); and
monitoring the PDCCH based on the combination of X and Y,
wherein X is a number of consecutive slots included in a first slot group,
wherein a plurality of first slot groups are repeated continuously without overlapping,
wherein Y is a number of consecutive slots included in a second slot group, and
wherein the second slot group consists of consecutive slots to which wrap-around is applied within the first slot group.

**【FIG. 1】**

| | One Frame (10ms) | |
|---|---|---|

| Half-Frame (5ms) | Half-Frame (5ms) |
|---|---|

| Subframe 0 (1ms) | Subframe 4 (1ms) | Subframe 5 (1ms) | Subframe 9 (1ms) |
|---|---|---|---|

Subframe (1ms)

**15KHz** | Slot (14 symbols) |

1ms

**30KHz** | Slot 0 (14 symbols) | Slot 1 |

500us

**60KHz** | Slot 0 (14 symbols) | Slot 1 | Slot 2 | Slot 3 |

250us

**120KHz** | Slot 0 (14 symbols) | Slot 1 | Slot 2 | Slot 3 | Slot 4 | Slot 5 | Slot 6 | Slot 7 |

125us

【FIG. 2】

【FIG. 3】

【FIG. 4】

【FIG. 5】

【FIG. 6】

【FIG. 7】

Determine combination of X and Y for PDCCH — S701

Monitor PDCCH based on combination of X and Y — S703

【FIG. 8】

【FIG. 9】

【FIG. 10】

Device (100, 200)

| Communication unit (110)<br>(e.g., 5G communication unit) | Control unit (120)<br>(e.g., processor(s)) |
| --- | --- |
| Communication circuit (112)<br>(e.g., processor(s), memory(s)) | Memory unit (130)<br>(e.g., RAM, storage) |
| Transceiver(s) (114)<br>(e.g., RF unit(s), antenna(s)) | Additional components (140)<br>(e.g., power unit/battery, I/O unit,<br>driving unit, computing unit) |

【FIG. 11】

Vehicle or autonomous driving vehicle (100)

| Communication unit (110) |
| --- |
| Control unit (120) |
| Memory unit (130) |
| Driving unit (140a) |
| Power supply unit (140b) |
| Sensor unit (140c) |
| Autonomous driving unit (140d) |

108

208

Device (100,200)

| Communication unit (210) |
| --- |
| Control unit (220) |
| Memory unit (230) |
| Driving unit (140a) |
| Power supply unit (140b) |
| Sensor unit (140c) |
| Autonomous driving unit (140d) |

## INTERNATIONAL SEARCH REPORT

| | International application No. |
|---|---|
| | **PCT/KR2022/016950** |

| | |
|---|---|
| **A. CLASSIFICATION OF SUBJECT MATTER** | |
| **H04W 72/04**(2009.01)i; **H04L 5/00**(2006.01)i; **H04L 1/00**(2006.01)i | |
| According to International Patent Classification (IPC) or to both national classification and IPC | |

| |
|---|
| **B. FIELDS SEARCHED** |
| Minimum documentation searched (classification system followed by classification symbols) |
| H04W 72/04(2009.01) |
| Documentation searched other than minimum documentation to the extent that such documents are included in the fields searched |
| Korean utility models and applications for utility models: IPC as above<br>Japanese utility models and applications for utility models: IPC as above |
| Electronic data base consulted during the international search (name of data base and, where practicable, search terms used) |
| eKOMPASS (KIPO internal) & keywords: PDCCH, 슬롯(slot), 모니터링(monitoring), 그룹(group) |

| | |
|---|---|
| **C. DOCUMENTS CONSIDERED TO BE RELEVANT** | |

| Category* | Citation of document, with indication, where appropriate, of the relevant passages | Relevant to claim No. |
|---|---|---|
| X<br>A | MODERATOR(LENOVO). Feature lead summary #2 for [104b-e-NR-52-71GHz-02] Email discussion/ approval on PDCCH Monitoring Enhancements. R1-2104057, 3GPP TSG RAN WG1 Meeting #104-e. 21 April 2021.<br>See sections 2.1.3, 3.1.18 and 3.1.20. | 1,10-12<br>2-9 |
| A | MODERATOR(LENOVO). Feature lead summary #2 for B52.6 GHz PDCCH monitoring enhancements. R1-2110521, 3GPP TSG RAN WG1 Meeting #106bis-e. 18 October 2021.<br>See sections 2.1.1 and 3.1. | 1-12 |
| A | LG ELECTRONICS. PDCCH monitoring enhancements to support NR above 52.6 GHz. R1-2100893, 3GPP TSG RAN WG1 Meeting #104-e. 19 January 2021.<br>See section 2. | 1-12 |
| A | CONVIDA WIRELESS. PDCCH Monitoring for NR from 52.6 GHz to 71 GHz. R1-2110110, 3GPP TSG RAN WG1 Meeting #106bis-e. 02 October 2021.<br>See section 3. | 1-12 |

| | | | |
|---|---|---|---|
| ☑ Further documents are listed in the continuation of Box C. | | ☑ See patent family annex. | |

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **16 February 2023** | **17 February 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

| International application No. |
| --- |
| **PCT/KR2022/016950** |

**C.** **DOCUMENTS CONSIDERED TO BE RELEVANT**

| Category* | Citation of document, with indication, where appropriate, of the relevant passages | Relevant to claim No. |
| --- | --- | --- |
| A | CN 110731112 A (HUAWEI TECHNOLOGIES CO., LTD.) 24 January 2020 (2020-01-24)<br>See paragraphs [0007]-[0109]; and claims 1-41. | 1-12 |

Form PCT/ISA/210 (second sheet) (July 2022)

INTERNATIONAL SEARCH REPORT
Information on patent family members

International application No.

**PCT/KR2022/016950**

| Patent document cited in search report | | | Publication date (day/month/year) | Patent family member(s) | | | Publication date (day/month/year) |
|---|---|---|---|---|---|---|---|
| CN | 110731112 | A | 24 January 2020 | EP | 3626009 | A1 | 25 March 2020 |
| | | | | US | 11212825 | B2 | 28 December 2021 |
| | | | | US | 2020-0154467 | A1 | 14 May 2020 |
| | | | | US | 2022-0201727 | A1 | 23 June 2022 |
| | | | | WO | 2018-228487 | A1 | 20 December 2018 |

Form PCT/ISA/210 (patent family annex) (July 2022)